# EUROPEAN PATENT APPLICATION

(11) **EP 0 971 350 A1**
(43) Date of publication of application: **12.01.2000**
(21) Application number: 98950498.0
(22) Date of filing: 02.11.1998
(51) Int. Cl.: G11B 20/10, H04N 7/24

(54) **INFORMATION ENCODING DEVICE AND METHOD, INFORMATION DECODING DEVICE AND METHOD, RECORDING MEDIUM, AND PROVIDED MEDIUM**

(30) Priority: 31.10.1997 JP 30109397; 13.08.1998 JP 22880598
(71) Applicant: Sony Corporation, Tokyo 141-0001 (JP)
(72) Inventor: Tsutsui, Kyoya, c/o Sony Corporation, Shinagawa-ku, Tokyo 141-0001 (JP); Shimoyoshi, Osamu, c/o Sony Corporation, Shinagawa-ku, Tokyo 141-0001 (JP); Honma, Hiroyuki, c/o Sony Corporation, Shinagawa-ku, Tokyo 141-0001 (JP)
(74) Representative: Melzer, Wolfgang, Dipl.-Ing.
(86) International application number: JP9804960
(87) International publication number: WO9923657

(57) **Abstract**

An inputted music signal and an advertisement sound signal are synthesized by a synthesizing section, and the synthesized signal is coded by a first coding section. The advertisement sound signal is coded and enciphered by a second coding section, then sent to a code string synthesizing section, and synthesized with the output of the first coding section. With respect to this signal obtained by code string synthesis, only the music signal synthesized with the advertisement sound can be reproduced unless cipher key information is provided. However, by decoding the enciphered signal and thus cancelling the advertisement sound signal component from the synthesized signal, it is possible to reproduce the music signal alone. Thus, even when there is no cipher key information, the information signal can be reproduced in an imperfect state (where the unwanted signal is added). If there is the key information, the information signal can be reproduced in the perfect state.

## Description

### Technical Field

This invention relates to an information coding device and method, an information decoding device and method, a recording medium, and a providing medium. Particularly, it relates to an information coding device and method, an information decoding device and method, a recording medium, and a providing medium which enable easy providing of high-definition audio signals and audio signals for trial listening to promote sales thereof.

### Background Art

There is known a software distribution method in which information signals such as audio signals and video signals are enciphered and then broadcast or recorded on a recording medium so that only a person who has purchased a key is allowed to view or listen to such information signals. For example, there is known a method in which an initial value of a random number sequence is provided as a key signal with respect to a bit string of PCM (pulse code modulation) audio signals so as to transmit or record onto a recording medium a bit stream obtained by taking an exclusive OR of the generated random number sequence consisting of 0 and 1 and the PCM bit string. As this method is used, only the person who has obtained the key signal can correctly reproduce the audio signals and a person who has not obtained the key signal can only reproduce noise.

Meanwhile, a method for compressing audio signals and then broadcasting or recording the compressed audio signals on a recording medium is popularly used, and recording media such as a magneto-optical disc capable of recording coded audio signals are broadly used. Various techniques for high-efficiency coding of audio signals are known. For example, there is known a subband coding (SBC) technique, which is a non-blocked frequency subband coding system for splitting audio signals on the time base into a plurality of frequency bands and coding the plurality of frequency bands without blocking the audio signals, and a blocked frequency subband coding system, that is, a so-called transform coding system for converting (by spectrum conversion) signals on the time base to signals on the frequency base, then splitting the signals into a plurality of frequency bands, and coding the signals of each band. Also, a high-efficiency coding technique which combines the above-described subband coding and transform coding is considered. In this case, after band splitting is carried out in the subband coding system, the signals of each band are spectrum-converted to signals on the frequency base and the spectrum-converted signals of each band are coded.

As the above-described filter, a QMF (quadrature mirror filter) is known. This QMF filter is described in R.E. Crochiere, Digital coding of speech in subbands, Bell Syst. Tech. J. Vol.55, No.8, 1976. Also, a bandwidth filter splitting technique is described in Joseph H. Rothweiler, Polyphase Quadrature filters - A new subband coding technique, ICASSP 83, BOSTON.

As the above-described spectrum conversion, there is known spectrum conversion in which input audio signals are blocked on the basis of a predetermined unit time (frame) and converted from the time base to the frequency base by carrying out discrete Fourier transform (DFT), discrete cosine transform (DCT) or modified discrete cosine transform (MDCT) for each block. MDCT is described in J. P. Princen, A. B. Bradley, Subband/Transform Coding Using Filter Bank Designs Based on Time Domain Aliasing Cancellation, Univ. of Surrey, Royal Melbourne Inst. of Tech., ICASSP 1987.

In the case where the above-described DFT or DCT is used as a method for converting waveform signals to a spectrum, M units of independent real-number data are obtained by carrying out conversion of time blocks each consisting of M samples. To reduce connection distortion between time blocks, it is normal to cause a block to overlap adjacent blocks on both sides thereof by M₁ samples. Therefore, in DFT or DCT, M units of real-number data are quantized and coded with respect to (M-M₁) samples on the average.

On the other hand, in the case where the above-described MDCT is used as a method for converting signals to a spectrum, M units of real-number data are obtained from 2M samples as a result of overlapping adjacent time blocks on both sides by M samples. Therefore, in MDCT, M units of real-number data are quantized and coded with respect to M samples. In a decoding device, waveform elements obtained by carrying out inversion in each block from the codes obtained by MDCT are added while being caused to interfere with each other, thus reconstructing waveform signals.

In general, by elongating the time block for conversion, the frequency resolution of the spectrum is increased and energy is concentrated at a specified spectral component. Therefore, by using the MDCT technique in which conversion is carried out with a long block length with each block overlapping both adjacent blocks by a half and in which the number of generated spectral signals is not increased from the original number of time samples, more efficient coding can be carried out than in the case where DFT or DCT is used. Also, by causing adjacent blocks to have a sufficiently long overlap, distortion between blocks of the waveform signals can be reduced.

As the signals split into each band by filtering or spectrum conversion are thus quantized, a band where quantization noise is generated can be controlled and more auditorily efficient coding can be carried out by utilizing the characteristics such as a masking effect. If normalization is carried out for each band with the maximum value of absolute values of signal components in each band before quantization is carried out, more auditorily efficient coding can be carried out.

With respect to the frequency splitting width for quantizing each frequency component obtained by frequency band splitting, for example, band splitting in consideration of human auditory characteristics is carried out. Specifically, audio signals are split into a plurality of bands (for example, 25 bands) with a bandwidth which is broader in higher frequency areas, generally referred to as critical bands. In coding the data of each band in this case, predetermined bit distribution for each band or adaptive bit allocation for each band is carried out. For example, in coding coefficient data obtained by MDCT processing by using bit allocation, the MDCT coefficient data of each band obtained by MDCT processing for each block is coded with an adaptive number of allocated bits.

Two methods for such bit allocation are known, as described in R. Zelinski and P. Noll, Adaptive Transform Coding of Speech Signals, and IEEE Transactions of Acoustics, Speech, and Signal Processing, vol. ASSP-25, No.4, August 1977.

In the techniques described in these references, bit allocation is carried out on the basis of the magnitude of signals of each band. In accordance with such method, the quantization noise spectrum is flat and the noise energy is minimum. However, since the masking effect is not utilized auditorily, the actual feeling of noise is not optimum.

On the other hand, a method for carrying out fixed bit allocation by utilizing the auditory masking effect and thus obtaining a necessary signal-to-noise ratio for each band is described in M.A. Kransner, The critical band coder -- digital encoding of the perceptual requirements of the auditory system, MIT, ICASSP 1980. In this method, however, since bit allocation is fixed, a satisfactory characteristic value is not obtained even when characteristics are measured with a sine-wave input.

In order to solve these problems, there is proposed a high-efficiency coding device for divisionally using all the bits usable for bit allocation, for a predetermined fixed bit allocation pattern of each subblock and for bit distribution depending upon the magnitude of signals of each block, and causing the division ratio to depend upon the signals related with input signals so that the division rate for the fixed bit allocation is increased as the spectrum of the signals becomes smoother.

According to this method, in the case where the energy is concentrated at a specified spectrum as in a sine wave input, a large number of bits are allocated to a block including that spectrum, thereby enabling significant improvement in the overall signal-to-noise characteristic. Since the human auditory sense is generally acute to a signal having a steep spectral component, improvement in the signal-to-noise characteristic by using such method not only leads to improvement in the numerical value of measurement but also is effective for improving the sound quality perceived by the auditory sense.

In addition to the foregoing method, various other methods for bit allocation are proposed. Therefore, if a fine and precise model with respect to the auditory sense is realized and the capability of the coding device is improved, auditorily more efficient coding can be carried out. In such methods, it is typical to find a bit allocation reference value of a real number such as to realize with high fidelity the signal-to-noise characteristic found by calculation, and then use an integer value approximate thereto as the number of allocated bits.

Meanwhile, the present Assignee has proposed in the U.S. Patent No. 5,717,821 a method for separating tonal components which are particularly important in terms of the auditory sense, that is, signal components having the energy concentrated around a specified frequency, from spectral signals, and coding these tonal components separately from the other spectral components. Thus, it is possible to efficiently code audio signals at a high compression rate without generating serious deterioration in the sound quality perceived by the auditory sense.

In actual constitution of code strings, first, quantization precision information and normalization coefficient information are coded with a predetermined number of bits for each band to be normalized and quantized, and then the normalized and quantized spectral signals are coded.

In the so-called MPEG (Moving Picture Experts Group) standard, ISO/IEG 11172-3: 1993(E), 1993, a high-efficiency coding system in which the number of bits expressing quantization precision information varies from band to band is described. In accordance with this standard, the number of bits expressing quantization precision information becomes smaller as the frequency becomes higher.

Moreover, a method for determining quantization precision information from normalization coefficient information in a decoding device, instead of directly coding quantization precision information, is known. In this method, however, since the relation between normalization coefficient information and quantization precision information is determined at the time when the standard is set, control of quantization precision based on an auditory model of a higher degree cannot be introduced in the future. Also, if the compression rate to be realized has a certain range, it is necessary to determine the relation between normalization coefficient information and quantization precision information for each compression rate.

Next, there is known a method for coding quantized spectral signals more efficiently by using variable-length coding described in D.A. Huffman, A Method for Construction of Minimum Redundancy Codes, Proc. I. R. E., 40, p.1098 (1952).

The signals coded as described above can be enciphered and distributed similarly to the case of PCM signals. In this case, a person who has not obtained a key signal cannot reproduce the original signals. There is also a method for converting PCM signals to random signals and then coding the signals for compression, instead of enciphering coded bit strings. In this case, too, a person who has not obtained a key signal can only reproduce noise.

However, in accordance with these scrambling methods, if there is no key, reproduction of the scrambled signals generates noise and the contents of the software cannot be grasped.

Conventionally, in the case where signals coded by high-efficiency coding are enciphered, it is difficult to provide code strings meaningful to a normal reproducing device having no cipher decoding function without lowering the compression rate. That is, in the case where code strings obtained by high-efficiency coding are scrambled as described above, reproduction of the code strings generates noise. Also, if the scrambled code strings are not in conformity to the standard of the original high-efficiency codes, there is a risk that the reproducing device will not operate at all.

On the other hand, if the information quantity is reduced by utilizing the auditory characteristic in the case where high-efficiency coding is carried out after scrambling of PCM signals, the signals obtained by scrambling the PCM signals cannot necessarily be reproduced at the time when high-efficiency coding is cancelled. Therefore, it is difficult to correctly cancel scrambling. For this reason, it is necessary to select a method for correctly cancelling scrambling even though the efficiency of the compression method is lowered.

Thus, the present Assignee has proposed, in the Japanese Publication of Unexamined Patent Application No. Hei 10-135944 (laid open on 22 May 1998), a method for dividing audio signals into low-frequency signals and high-frequency signals and enciphering only the high-frequency signals so that the contents recorded with sound quality of a narrow reproduction band can be known even when there is no key, thereby causing a listener to determine whether or not to obtain the key on the basis of the contents.

In this method, however, it is difficult to lead a listener who does not care about the narrow reproduction bandwidth of music signals to take the trouble to cancel scrambling so as to listen to the music of high sound quality. In addition, if the reproduction band is narrowed to such an extent that the above-mentioned listener cannot be satisfied, it is difficult to provide sufficient sound quality to a listener who will be satisfied only with relatively high sound quality.

### Disclosure of the Invention

In view of the foregoing status of the art, it is an object of the present invention to provide an information coding device and method, an information decoding device and method, a recording medium, and a providing medium which enable trial listening for confirming the contents without having a cipher key and enable complete reproduction by using a key in the case where information signals such as audio signals and video signals are enciphered and supplied by transmission or recording on a recording medium.

An information coding device according to the present invention includes: first coding means for coding a mixed signal obtained by mixing a first signal and a second signal; and second coding means for coding information including a component for cancelling the second signal from the mixed signal.

An information coding method according to the present invention includes: a first coding step of coding a mixed signal obtained by mixing a first signal and a second signal; and a second coding step of coding information including a component for cancelling the second signal from the mixed signal.

A providing medium according to the present invention provides a control command for causing an information processing device to carry out processing including: a first coding step of coding a mixed signal obtained by mixing a first signal and a second signal; and a second coding step of coding information including a component for cancelling the second signal from the mixed signal.

In the information coding device and method, and the providing medium, it is preferred that the first coding means and the second coding means carry out coding in accordance with different coding systems.

An information decoding device according to the present invention includes: first decoding means for decoding a first coded signal obtained by coding a signal generated by mixing a plurality of signals; second decoding means for decoding a second coded signal obtained by coding information including a component for cancelling a part of the first coded signal; and synthesis means for synthesizing the signal from the first decoding means and the signal from the second decoding means.

An information decoding method according to the present invention includes: a first decoding step of decoding a first coded signal obtained by coding a signal generated by mixing a plurality of signals; a second decoding step of decoding a second coded signal obtained by coding information including a component for cancelling a part of the first coded signal; and a synthesis step of synthesizing the signal from the first decoding step and the signal from the second decoding step.

A providing medium according to the present invention provides a control command for causing an information processing device to carry out processing including: a first decoding step of decoding a first coded signal obtained by coding a signal generated by mixing a plurality of signals; a second decoding step of decoding a second coded signal obtained by coding information including a component for cancelling a part of the first coded signal; and a synthesis step of synthesizing the signal from the first decoding step and the signal from the second decoding step.

A recording medium according to the present invention has recorded thereon a code string including a first coded signal obtained by coding a signal generated by mixing a plurality of signals and a second coded signal obtained by coding information including a component for cancelling a part of the first coded signal.

An information coding device according to the present invention includes: first coding means for coding a mixed signal obtained by mixing a first signal and a second signal; and second coding means for coding a third signal of higher definition than that of the first signal.

An information coding method according to the present invention includes: a first coding step of coding a mixed signal obtained by mixing a first signal and a second signal; and a second coding step of coding a third signal of higher definition than that of the first signal.

A providing medium according to the present invention provides a control command for causing an information processing device to carry out processing including: a first coding step of coding a mixed signal obtained by mixing a first signal and a second signal; and a second coding step of coding a third signal of higher definition than that of the first signal.

An information decoding device according to the present invention includes: first decoding means for decoding a first coded signal obtained by coding a signal generated by mixing a plurality of signals; second decoding means for decoding a second coded signal obtained by coding a signal of higher definition than the first coded signal; and control means for carrying out control to output a signal obtained by decoding either the first coded signal or the second coded signal.

An information decoding method according to the present invention includes: a first decoding step of decoding a first coded signal obtained by coding a signal generated by mixing a plurality of signals; a second decoding step of decoding a second coded signal obtained by coding a signal of higher definition than the first coded signal; and a control step of carrying out control to output a signal obtained by decoding either the first coded signal or the second coded signal.

A providing medium according to the present invention provides a control command for causing an information processing device to carry out processing including: a first decoding step of decoding a first coded signal obtained by coding a signal generated by mixing a plurality of signals; a second decoding step of decoding a second coded signal obtained by coding a signal of higher definition than the first coded signal; and a control step of carrying out control to output a signal obtained by decoding either the first coded signal or the second coded signal.

A recording medium according to the present invention has recorded thereon a code string including a first coded signal obtained by coding a signal generated by mixing a plurality of signals and a second coded signal obtained by coding a signal of higher definition than the first coded signal.

According to the present invention, a mixed signal obtained by mixing a first signal and a second signal is coded, and information including a component for cancelling the second signal from the mixed signal is coded. Therefore, it is possible to normally reproduce at least the signal obtained by mixing the first signal and the second signal, and provide the information which enables cancellation of the second signal at a desired time.

Also, according to the present invention, a first coded signal obtained by coding a signal generated by mixing a plurality of signals is decoded, and a second coded signal obtained by coding information including a component for cancelling a part of the first coded signal is decoded. Then, the decoded signals are synthesized. Therefore, it is possible to securely cancel a part of the plurality of signals and obtain only the other signals of them.

In addition, according to the present invention, a code string including a first coded signal obtained by coding a signal generated by mixing a plurality of signals and a second coded signal obtained by coding information including a component for cancelling a part of the first coded signal is recorded on a recording medium. Therefore, it is possible to securely provide an original signal and a signal for trial listening to a user.

Moreover, according to the present invention, a mixed signal obtained by mixing a first signal and a second signal is coded, and a third signal of higher definition than that of the first signal is coded. Therefore, it is possible to provide information for trial listening and information of higher definition while restraining generation of noise.

Also, according to the present invention, control is carried out to output a signal obtained by decoding either a first coded signal or a second coded signal. Therefore, it is possible to securely select one of information of trial listening and information of higher definition without generating perceptible noise.

In addition, according to the present invention, a code string including a first coded signal obtained by coding a signal generated by mixing a plurality of signals and a second coded signal obtained by coding a signal of higher definition than the first coded signal is recorded on a recording medium. Therefore, it is possible to provide a signal for trial listening and information of higher definition in the state where noise is imperceptible.

### Brief Description of the Drawings

Fig.1 is a block diagram showing an exemplary structure for enciphering an information signal.
Fig.2 is a block diagram showing an exemplary structure for decoding a code string obtained by enciphering an information signal.
Fig.3 illustrates the principle of encipherment and decoding.
Fig.4 is a block diagram showing an exemplary structure of a magneto-optical disc device to which the present invention is applied.
Fig.5 is a block diagram showing an exemplary structure of a coding device to which the present invention is applied.
Fig.6 is a block diagram showing an exemplary structure of a converting section 71 of Fig.5.
Fig.7 is a block diagram showing an exemplary structure of a signal component coding section 72 of Fig.5.
Fig.8 is a block diagram showing an exemplary structure of a decoding device to which the present invention is applied.
Fig.9 is a block diagram showing an exemplary structure of a signal component decoding section 112 of Fig.8.
Fig.10 is a block diagram showing an exemplary structure of an inverting section 113 of Fig.8.
Fig.11 illustrates an output of the converting section 71 of Fig.5.
Fig.12 illustrates another exemplary output of the converting section 71 of Fig.5.
Fig.13 illustrates an exemplary code string.
Fig.14 illustrates another exemplary code string.
Fig.15 illustrates still another exemplary code string.
Fig.16 is a block diagram showing an exemplary structure of a coding device as an embodiment of the present invention.
Fig.17 is a block diagram showing an exemplary structure of a first coding section 162 of Fig.16.
Fig.18 is a block diagram showing an exemplary structure of a second coding section 165 of Fig.16.
Fig.19 is a block diagram showing an exemplary structure of a decoding device as an embodiment of the present invention.
Fig.20 is a block diagram showing an exemplary structure of a first decoding section 202 of Fig.19.
Fig.21 is a block diagram showing an exemplary structure of a second decoding section 205 of Fig.19.
Fig.22 is a flowchart for explaining decoding operation of the decoding device shown in Fig.19.
Fig.23 illustrates another exemplary code string.
Fig.24 is a flowchart for explaining coding operation of the code string shown in Fig.23.
Fig.25 illustrates still another exemplary code string.
Fig.26 illustrates still another exemplary code string.
Fig.27 is a block diagram showing an exemplary structure of a coding device in generating the code string of Fig.26.
Fig.28 is a block diagram showing an exemplary structure of a second coding section 565 of Fig.27.
Fig.29 is a block diagram showing an exemplary structure of a converting section 241 of Fig.28.
Fig.30 is a block diagram showing an exemplary structure of a band splitting filter 251 of Fig.29.
Fig.31 is a block diagram showing an exemplary structure of a signal component coding section 242 of Fig.28.
Fig.32 is a block diagram showing an exemplary structure of a tonal component coding section 262 of Fig.31.
Fig.33 illustrates another exemplary code string.
Fig.34 is a flowchart for explaining operation of the coding device of Fig.27.
Fig.35 is a block diagram showing an exemplary structure of a decoding device in decoding the code string of Fig.26.
Fig.36 is a block diagram showing an exemplary structure of a second decoding section 605 of Fig.35.
Fig.37 is a block diagram showing an exemplary structure of a signal component decoding section 403 of Fig.36.
Fig.38 is a block diagram showing an exemplary structure of an inverting section 404 of Fig.36.
Fig.39 is a block diagram showing an exemplary structure of a band synthesizing filter 412 of Fig.38.
Fig.40 is a flowchart for explaining operation of the decoding device of Fig.35.
Fig.41 illustrates another exemplary code string.
Figs.42A and 42B illustrate an example in the case where the present invention is applied to image signals.

### Best Mode for Carrying Out the Invention

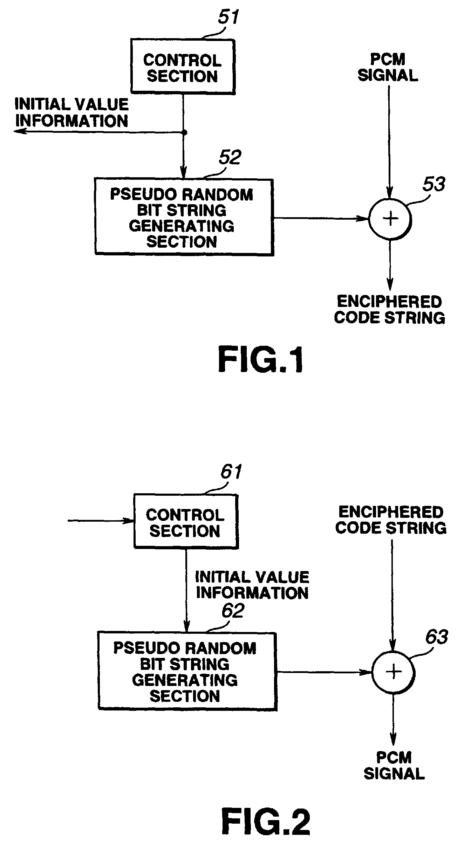

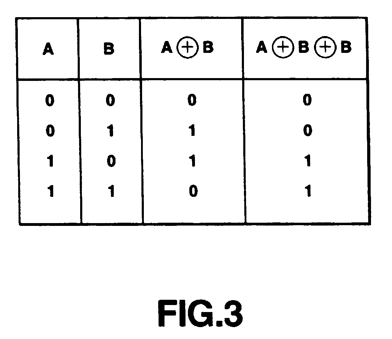

Prior to description of embodiments of the present invention, an example of an enciphering technique used in the present invention will be first described with reference to Figs.1 and 3 with respect to the case where PCM signals are handled.

Fig.1 is a block diagram showing an exemplary structure of an enciphering device for generating an enciphered bit string. In this enciphering device, each bit of a PCM signal as an input information signal is sent to an exclusive-OR circuit 53, and an exclusive OR with a bit string generated by a pseudo random bit string generating section 52 is taken by utilizing initial value information sent from a control section 51. Thus, an enciphered bit string is outputted. The pseudo random bit string generating section 52 can be constituted to select the 50th bit from the bottom of a random-number sequence obtained by repeating an operation for squaring an arbitrarily selected bit string of a length of 100 bits as an initial value and leaving only center 100 bits. Thus, by recording the outputted bit string onto an optical disc, it is possible to enable only a person who has obtained a correct key (in this case, initial value information) to reproduce the original PCM signal.

Fig.2 shows an exemplary structure of a decoding device for decoding the enciphered bit string outputted from the enciphering device of Fig.1. A pseudo random bit string generating section 62 has the same function as the pseudo random bit string generating section 52 of Fig.1. Therefore, if the same key signal is provided an initial value, the same pseudo random bit string is obtained. In an exclusive-OR circuit 63, an exclusive OR of this pseudo random bit string and the enciphered bit string is taken. If an exclusive OR with respect to a bit string B (pseudo random bit string) is taken twice for a bit string A, as shown in Fig.3, the bit string A is reproduced. Therefore, in the case where the correct key signal (pseudo random bit string) is obtained, the enciphered bit string can be correctly decoded. In the example of Fig.2, key information is supplied to a control section 61, and the control section 61 sends initial value information equal to the initial value information from the control section 51 of Fig.1 to the pseudo random bit string generating section 62. Thus, the pseudo random bit string generating section 62 is caused to generate and send the same pseudo random bit string as in encipherment of Fig.1 to the exclusive-OR circuit 63.

However, in the case where encipherment as described above is carried out to the entire PCM signals as the input information signals, the contents of software recorded on a medium such as a disk cannot be known at all unless the correct key signal is obtained. Therefore, a person who has obtained the disk cannot determine whether to purchase the key signal for deciphering. For this reason, it is not possible to distribute software at a low price and lead a user who listens to the software on trial to purchase a key signal to the desired software.

Thus, in order to solve such problem, in an embodiment of the present invention, audio signals obtained by adding an explanatory speech and a commercial message to audio signals such as music are coded in a first coding system, and a cancel signal for cancelling the audio signals such as the explanatory speech is coded in a second coding system having enciphering processing or the like added thereto. Thus, with a decoding device capable of decoding only a code coded in the first coding system, the music signals with the explanatory speech can be listened to on trial. With a decoding device capable of decoding both the code coded in the first coding system and the code coded in the second coding system, not only trial listening can be carried out but also pure music signals can be listened to.

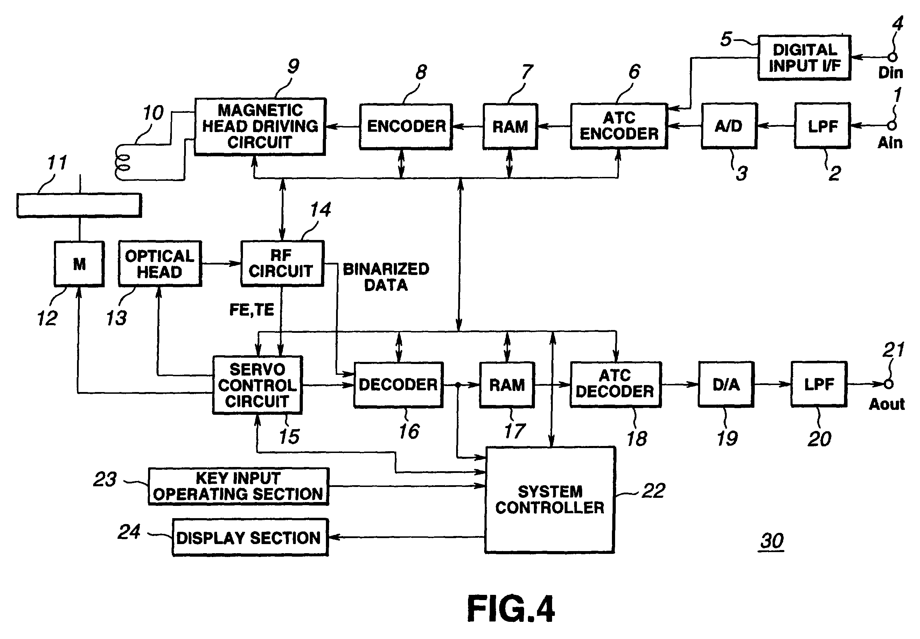

Fig.4 shows an exemplary structure of a magneto-optical disc device to which the present invention is applied. In this magneto-optical disc device 30, a magneto-optical disc 11 is rotationally driven by a spindle motor 12.

At the time of recording of data onto the magneto-optical disc 11, a modulation magnetic field corresponding to recording data is applied to a magnetic head 10 in the state where the magneto-optical disc is irradiated with a laser beam by an optical head 13. Thus, by magnetic modulation recording, data is recorded along the recording track of the magneto-optical disc 11. At the time of reproduction, the recording track of the magneto-optical disc 11 is traced with a laser beam from the optical head 13, thus carrying out magneto-optical reproduction.

The optical head 13 is constituted by a laser light source such as a laser diode, optical components such as a collimating lens, an objective lens, a polarized beam splitter and a cylindrical lens, and a photodetector having a light receiving section of a predetermined pattern. This optical head 13 is provided at a position facing the magnetic head 10 via the magneto-optical disc 11. When recording data onto the magneto-optical disc 11, the magnetic head 10 is driven by a magnetic head driving circuit 9 of a recording system as will be later described so as to apply a modulation magnetic field corresponding to the recording data to the magneto-optical disc 11, and a target track of the magneto-optical disc 11 is irradiated with a laser beam by the optical head 13. Thus, thermomagnetic recording is carried out in accordance with the magnetic field modulation system. Also, the optical head 13 detects a reflected light of the laser beam radiated on the target track, thus detecting a focusing error by a so-called astigmatic method and detecting a tracking error by a so-called push-pull method. When reproducing data from the magneto-optical disc 11, the optical head 13 detects the focusing error and the tracking error, and detects at the same time the difference in polarization angle (Kerr rotation angle) of the reflected light of the laser beam from the target track so as to generate a reproduction signal.

The output of the optical head 13 is supplied to an RF circuit 14. This RF circuit 14 extracts the focusing error signal and the tracking error signal from the output of the optical head 13 and supplies these extracted signals to a servo control circuit 15. Also, the RF circuit 14 binarizes the reproduction signal and supplies the binarized signal to a decoder 16 of a reproducing system as will be later described.

The servo control circuit 15 is constituted by, for example, a focusing servo control circuit, a tracking servo control circuit, a spindle motor servo control circuit, and a thread servo control circuit. The focusing servo control circuit carries out focusing control of the optical system of the optical head 13 so that the focusing error signal becomes minimum. The tracking servo control circuit carries out tracking control of the optical system of the optical head 13 so that the tracking error signal becomes minimum. The spindle motor servo control circuit controls the spindle motor 12 to rotationally drive the magneto-optical disc 11 at a predetermined rotational speed (for example, a constant linear velocity). The thread servo control circuit moves the optical head 13 and the magnetic head 10 to the position of a target track of the magneto-optical disc 11 designated by a system controller 22. The servo control circuit 15, which thus carries out various control operations, sends information indicating the operating state of each part controlled thereby to the system controller 22.

To the system controller 22, a key input operating section 23 and a display section 24 are connected. This system controller 22 controls the recording system and the reproducing system in accordance with operation input information corresponding to the operation of the key input operating section 23. The system controller 22 also manages the recording position and the reproducing position on the recording track traced by the optical head 13 and the magnetic head 10, on the basis of address information on the sector basis reproduced by Q-data of the header time and subcode from the recording track of the magneto-optical disc 11. In addition, the system controller 22 controls the display section 24 to display the reproduction time on the basis of the data compression rate and the reproducing position information on the recording track.

This display of the reproduction time is carried out in the following manner. That is, the address information (absolute time information) of the sector basis calculated on the basis of the Q-data of so-called header time and subcode, reproduced from the recording track of the magneto-optical disc 11, is multiplied by the reciprocal of the data compression rate (for example, 4 in the case of 1/4 compression), thereby finding actual time information. This actual time information is displayed on the display section 24. At the time of recording, too, in the case where the absolute time information is pre-recorded (pre-formatted) on the recording track of the magneto-optical disc 11, the current position can be displayed in the form of actual recording time by reading the pre-formatted absolute time information and multiplying the absolute time information by the reciprocal of the data compression rate.

In the recording system of the magneto-optical disc device 30, an analog audio input signal A_{IN} from an input terminal 1 is supplied to an A/D convener 3 through a low-pass filter (LPF) 2. The A/D converter 3 quantizes the analog audio input signal A_{IN}. A digital audio signal obtained from the A/D converter 3 is supplied to an ATC (adaptive transform coding) encoder 6. A digital audio input terminal D_{IN} from an input terminal 4 is supplied to the ATC encoder 6 through a digital input interface circuit 5. The ATC encoder 6 carries out bit compression (data compression or coding) of the input signal A_{IN} or the input signal D_{IN} at a predetermined data compression rate in accordance with a coding system such as so-called ATRAC (adaptive transform acoustic coding) system or ATRAC 2 system of higher compression efficiency. The compressed data (ATC data) outputted from the ATC encoder 6 is supplied to a RAM 7. If the data compression rate is, for example, 1/8, the data transfer rate is reduced to 1/8 of the data transfer rate (75 sectors/sec) of the standard CD-DA format (which is the format of music CD), that is, to 9.375 sectors/sec.

Writing and reading of data to and from the RAM 7 is controlled by the system controller 22. The RAM 7 is used as a buffer memory for temporarily storing the ATC data supplied from the ATC encoder 6 and recording the data onto the magneto-optical disc 11, if necessary. That is, if the data compression rate is 1/8, the data transfer rate of the compressed audio data supplied from the ATC encoder 6 is reduced to 1/8 of the data transfer rate (75 sectors/sec) of the standard CD-DA format, that is, to 9.375 sectors/sec, and the compressed data is continuously written into the RAM 7. With respect to the compressed data (ATC) data, it suffices to record data of 8 sectors of the normal CD music data in one sector, as described above.

Specifically, this recording is carried out in a burst-like manner with a pause period at the same data transfer rate (75 sectors/sec) as that of the standard CD-DA format, by using clusters as recording units, each consisting of predetermined plural sectors (for example, 32 sectors plus several sectors). In the RAM 7, the ATC audio data having the data compression rate of 1/8, which is continuously written at the low transfer rate of 9.375 (= 75/8) sectors/sec corresponding to the bit compression rate, is read out as a recording data in a burst-like manner at a transfer rate of 75 sectors/sec. Although the overall data transfer rate of this read-out data to be recorded including the recording pause period is the low speed of 9.375 sectors/sec, the instantaneous data transfer rate within the time period of burst-like recording operation is the standard speed of 75 sectors/sec. Therefore, when the disc rotational speed is equal to the speed of the standard CD-DA format (that is, a constant linear velocity), recording is carried out at the same recording density and with the same storage pattern as in the CD-DA format.

The ATC audio data read out from the RAM 7 in a burst-like manner at the (instantaneous) transfer rate of 75 sectors/sec, that is, the recording data, is supplied to an encoder 8. In the data string supplied from the RAM 7 to the encoder 8, the unit to be continuously recorded in one recording operation includes a cluster consisting of a plurality of sectors (for example, 32 sectors) and several sectors for cluster connection arranged before and after the cluster. The cluster connection sectors are provided for preventing influence of interleaved data on data of other clusters by setting a data recording area longer than the interleave length (32 sectors) in the encoder 8.

The encoder 8 carries out coding processing (parity addition and interleave processing) for error correction and EFM coding processing of the recording data supplied from the RAM 7 in a burst-like manner as described above. The recording data coded by the encoder 8 is supplied to the magnetic head driving circuit 9. The magnetic head driving circuit 9 drives the magnetic head 10 to apply a modulation magnetic field corresponding to the recording data to the magneto-optical disc 11.

The system controller 22 carries out the above-described memory control of the RAM 7, and controls the recording position so as to continuously record the data, read out in a burst-like manner from the RAM 7 under the memory control, onto the recording track of the magneto-optical disc 11. This control of the recording position is carried out in the following manner. That is, the recording position of the recording data read out from the RAM 7 in a burst-like manner is managed by the system controller 22, and a control signal designating the recording position on the recording track of the magneto-optical disc 11 is supplied to the servo control circuit 15.

The reproducing system will now be described. This reproducing system is adapted for reproducing the recording data continuously recorded on the recording track of the magneto-optical disc 11 by the above-described recording system. The reproducing system has a decoder 16 to which a reproduction output obtained by tracing the recording track of the magneto-optical disc 11 with a laser beam from the optical head 13 and binarized by the RF circuit 14 is supplied. The optical head 13 can carry out reading of not only the magneto-optical disc 11 but also a read-only optical disc similar to a CD (compact disc).

The decoder 16 corresponds to the encoder 8 in the above-described recording system. The decoder 16 carries out the above-described decoding processing for error correction and EFM decoding processing of the reproduction output binarized by the RF circuit 14, and reproduces the ATC audio data having the data compression rate of 1/8 at a transfer rate of 75 sectors/sec higher than the normal transfer rate. The reproduction data obtained by the decoder 16 is supplied to a RAM 17.

Writing and reading of data to and from the RAM 17 is controlled by the system controller 22, and the reproduction data supplied from the decoder 16 at the transfer rate of 75 sectors/sec is written into the RAM 17 in a burst-like manner at the same transfer rate of 75 sectors/sec. From this RAM 17, the reproduction data written in a burst-like manner at the transfer rate of 75 sectors/sec is continuously read out at a transfer rate of 9.375 sectors/sec corresponding to the data compression rate of 1/8.

The system controller 22 carries out memory control to write the reproduction data into the RAM 17 at the transfer rate of 75 sectors/sec and to continuously read out the reproduction data from the RAM 17 at the transfer rate of 9.375 sectors/sec. Also, the system controller 22 carries out the above-described memory control of the RAM 17, and controls the reproducing position so as to continuously reproduce the reproduction data, written in the RAM 17 in a burst-like manner under the memory control, from the recording track of the magneto-optical disc 11. This control of the reproducing position is carried out in the following manner. That is, the reproducing position of the reproduction data read out from the RAM 17 in a burst-like manner is managed by the system controller 22, and a control signal designating the reproducing position on the recording track of the magneto-optical disc 11 is supplied to the servo control circuit 15.

The ATC audio data obtained as the reproduction data continuously read out from the RAM 17 at the transfer rate of 9.375 sectors/sec is supplied to an ATC decoder 18. This ATC decoder 18 corresponds to the ATC encoder 6 of the recording system, and reproduces 16-bit digital audio data by carrying out data expansion (bit expansion) of the ATC data eight times. The digital audio data from the ATC decoder 18 is supplied to a D/A converter 19.

The D/A converter 19 converts the digital audio data supplied from the ATC decoder 18 to an analog signal and thus forms an analog audio signal A_{OUT}. The analog audio signal A_{OUT} obtained from the D/A converter 19 is passed through a low-pass filter 20 and outputted from an output terminal 21.

In the above description, the magneto-optical disc device 30 has the recording system and the reproducing system at the same time. However, it is a matter of course that the recording system and the reproducing system can be provided separately. A coding device and a decoding device which will be described in detail hereinafter correspond to the ATC encoder 6 and the ATC decoder 8 in the magneto-optical disc device 30.

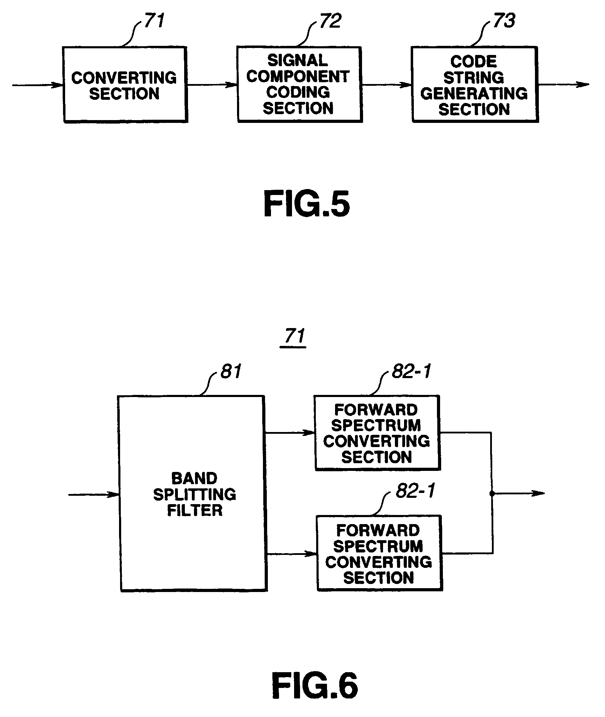

High-efficiency compression coding will now be described in detail. Specifically, a technique for high-efficiency coding of an input digital signal such as an audio PCM signal using subband coding (SBC), adaptive transform coding (ATC), and adaptive bit allocation will now be described with reference to Fig.5 and the drawings subsequent thereto.

Fig.5 is a block diagram showing the schematic structure of a coding device for acoustic waveform signals to which an embodiment of the present invention is applied. In this embodiment, an input signal waveform is converted to a signal of frequency components by a converting section 71, and then each component is coded by a signal component coding section 72. From the coded signal, a code string is generated by a code string generating section 73. The coded data is recorded onto the magneto-optical disc 11 in accordance with the procedures described with reference to Fig.4.

Fig.6 shows a specific example of the converting section 71 of Fig.5. In this example, the signal split into two bands by a band splitting filter is converted in each band to a spectral signal component by forward spectrum converting sections 82-1, 82-2 for MDCT(modified discrete cosine transform). The signal outputted from the band splitting filter 81 of the converting section 71 of Fig.6 is generated by thinning the input signal to 1/2. This signal has a bandwidth which is 1/2 of the bandwidth of the input signal. As the converting section 71, a number of other structures than this specific example can be considered. For example, an input signal may be directly converted to a spectral signal by using MDCT, or may be converted by using DFT (discrete Fourier transform) or DCT (discrete cosine transform) instead of MDCT. Although a signal can be split into band components by the so-called band splitting filter, it is more convenient to employ a method for converting a signal to frequency components by using the above-described spectrum conversion in which a large number of frequency components can be obtained with a relatively small quantity of operation.

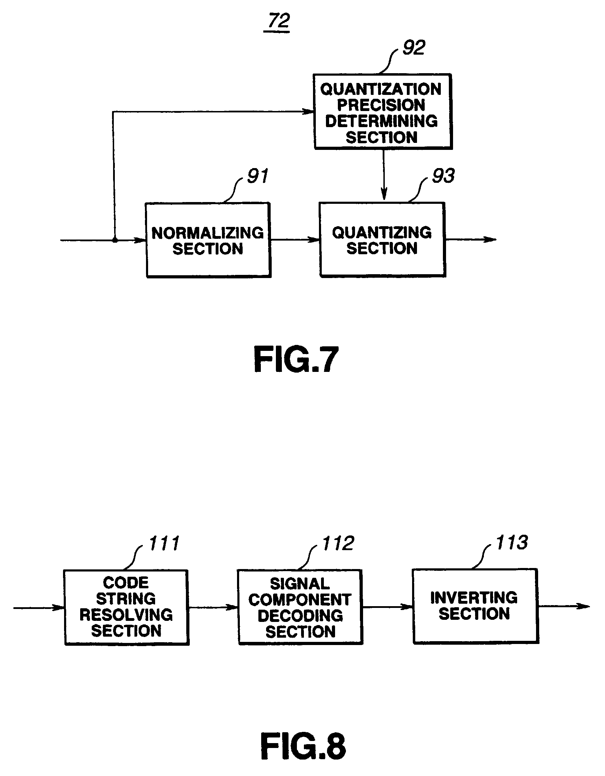

Fig.7 shows a specific example of the signal component coding section 72 of Fig.5. In this example, the signal components outputted from the forward spectrum converting section 82-1, 82-2 are normalized for each predetermined band by a normalizing section 91, and then quantized by a quantizing section 93 on the basis of quantization precision calculated by a quantization precision determining section 92. The normalized and quantized signal components are then outputted. The signal outputted from the quantizing section 93 includes normalization coefficient information and quantization precision information in addition to the quantized signal components.

Fig.8 is a block diagram showing an example of a decoding device for decoding an acoustic signal from the code string which is generated by the coding device shown in Fig.5 and recorded on the magneto-optical disc 11. This decoding device is constituted by the ATC decoder 18 of the magneto-optical disc device 30 of Fig.4. In the decoding device of Fig.8, a code string of an acoustic signal and a code string of control information such as a quantization step are resolved from the code string inputted from the RAM 17 by a code string resolving section 111. The code string of the acoustic signal is restored from these codes by a signal component decoding section 112, and then inverted to an acoustic waveform signal by an inverting section 113.

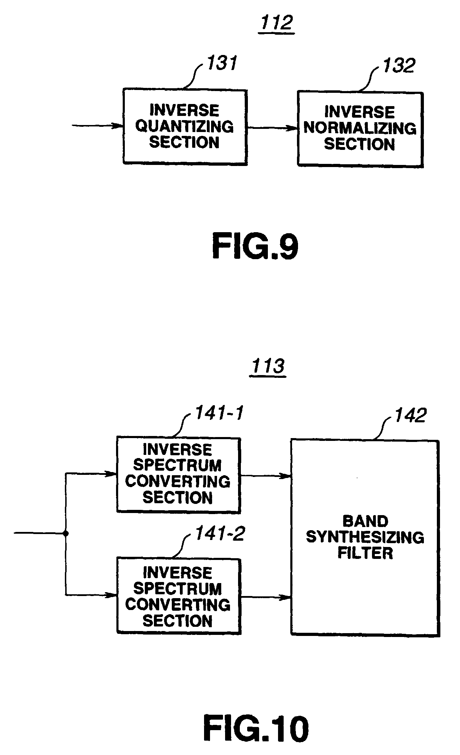

Fig.9 shows an exemplary structure of the signal component decoding section 112 of Fig.8. This signal component decoding section 112 corresponds to the structure of signal component coding section 72 of Fig.7. The data inputted from the code string resolving section 111 is inversely quantized by an inverse quantizing section 131 and then inversely normalized by an inverse normalizing section 132.

Fig.10 shows an exemplary structure of the inverting section 113 of Fig.8. This inverting section corresponds to the specific example of the converting section 71 of Fig.6. Inverse spectrum converting sections 141-1, 141-2 carry out inverse spectrum conversion of the signal of each band outputted from the inverse normalizing section 132. The signals of the respective bands processed by inverse spectrum conversion are synthesized by a band synthesizing filter 142.

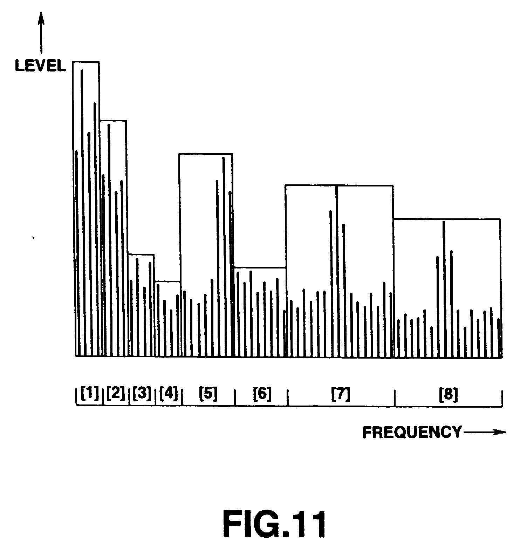

Fig.11 shows an example of the output of the converting section 71 of the coding device shown in Fig.5 (that is, an example of the output of the forward spectrum converting sections 82-1, 82-2 of Fig.6). In Fig.11, the level of the absolute value of the MDCT spectrum is converted to dB. An input signal is converted to 64 spectral signals for each predetermined time block. These 64 spectral signals are grouped into eight bands (hereinafter referred to as coding units) [1] to [8] in Fig.11, and normalization and quantization are carried out. By changing the quantization precision for each coding unit depending upon the distribution of frequency components, auditorily efficient coding can be carried out in which deterioration in the sound quality is minimized.

It is possible to further improve the coding efficiency in comparison with the foregoing method. For example, the coding efficiency can be improved by allocating a relatively short code length to a spectral signal of a high frequency from among the quantized spectral signals, and allocating a relatively long code length to a spectral signal of a low frequency. Alternatively, by providing a long conversion block length, the quantity of sub-information such as quantization precision information and normalization coefficient information can be relatively reduced and the frequency resolution is increased. Thus, since the quantization precision can be minutely controlled, the coding efficiency can be improved.

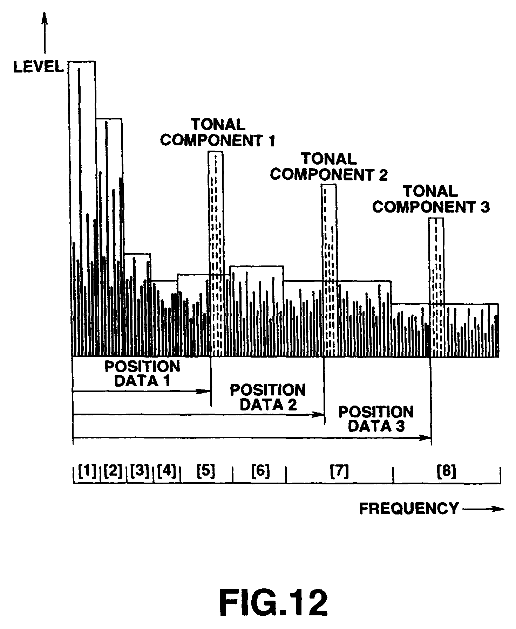

On other hand, the coding efficiency can also be improved by using a method for separating tonal components particularly important acoustically, that is, signal components having the energy concentrated around a specified frequency, from the spectral signals, and then coding these tonal components separately from the other spectral component, as shown in Fig.12 (as previously proposed by the present Assignee in the U.S. Patent No. 5,717,821).

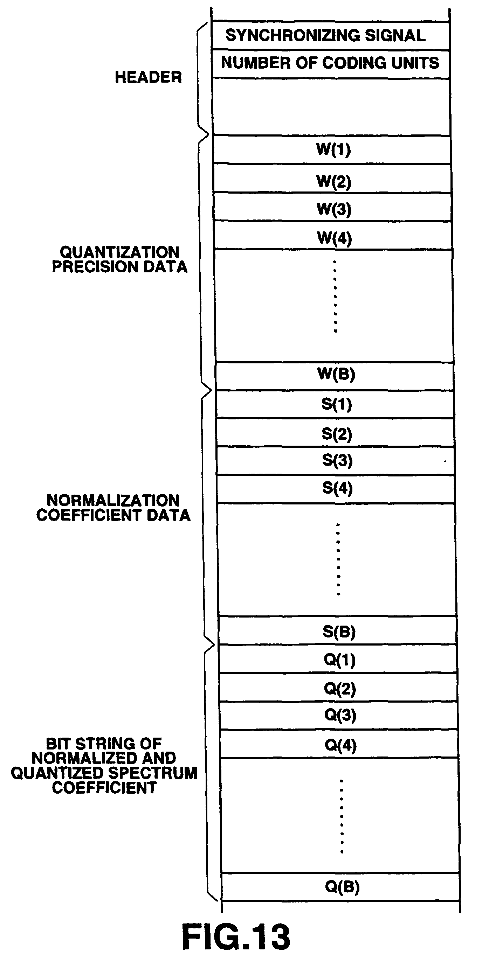

Fig.13 shows an exemplary format in the case where a signal coded by the coding device of Fig.5 is recorded onto the magneto-optical disc 11. In this example, the entire band is split into a total of B bands, in which the number of quantization bits W(i) of the i-th band (where 1≤i≤B) from the low-frequency side, the normalization coefficient S(i) of the i-th band, and the bit string Q(i) of the normalized and quantized spectrum coefficient of the i-th band are recorded in the order shown in Fig.13.

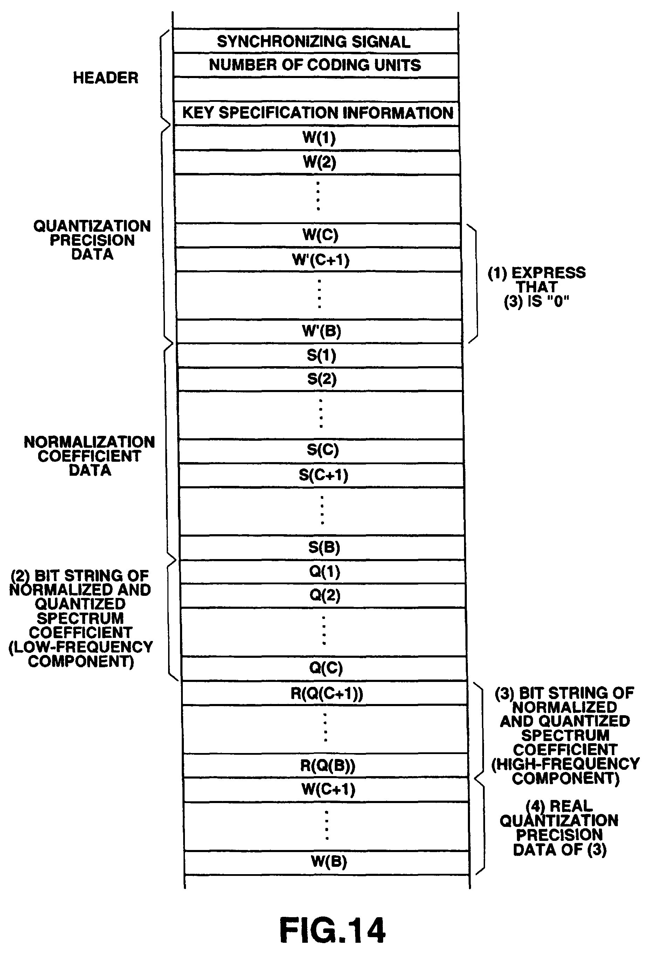

On the contrary, a part of the signal components is not enciphered so that the contents of recorded information can be confirmed by trial listening even with a general reproducing device having no cipher decoding function, and the signal components which enable reproduction of higher sound quality (higher definition) are enciphered so that only a person who has obtained a key can reproduce the music of high definition, as shown in Fig.14 (as previous proposed by the present Assignee in the Japanese Publication of Unexamined Patent Application No. Hei 10-135944).

In the example of Fig.14, pseudo information indicating that 0-bit allocation is carried out is recorded as W'(C+1) to W'(B) at a part (high-frequency part) where signals of W(C+1) to W(B) were recorded in the example of Fig.13, and the actual signals of W(C+1) to W(B) are recorded at the last part of the signals of this block.

Since recording of the signals of W(C+1) to W(B) requires bits, the number of bits used by the bit strings of the normalized and quantized spectrum coefficient is reduced in comparison to the example of Fig.13. The normalized and quantized (C+1)th to Bth spectrum coefficient data are enciphered and coded as code strings R(Q(C+1)) to R(Q(B)) by using pseudo random bit strings. In this example, key specification information for generation of random bit strings is coded at a header part.

In the case where the bit string of Fig.14 is reproduced by the decoding device of Fig.8 (having no cipher decoding function), the decoding device determines that no bit is allocated to the bands C+1 to B, and carries out reproduction on the assumption that the code strings R(Q(C+1)) to R(Q(B)) do not exist. Therefore, such uncomfortable noise as in the case where the bit string obtained by enciphering the entire code string of Fig.13 is reproduced is not generated. Instead, an output sound of a narrow band (of low-frequency components excluding high-frequency components) is reproduced. Thus, a trial listener can determine whether to obtain the key (to listening to the music of high definition), by listening to the sound which is not uncomfortable but is not high in quality.

In this method, however, it is difficult to lead a listener who does not care about the narrow reproduction bandwidth of music signals to take the trouble to cancel scrambling so as to listen to the music of high sound quality. In addition, if the reproduction band is narrowed to such an extent that the above-mentioned listener cannot be satisfied, it is difficult to provide sufficient sound quality to a listener who will be satisfied only with relatively high sound quality.

Thus, in the embodiment of the present invention, signals obtained by adding signals of an explanatory speech and an advertisement sound to music signals in advance are coded in accordance with a first coding system (for example, the so-called ATRAC (adaptive transform acoustic coding: trademark) system, hereinafter also referred to as the ATC 1 system, as a kind of ATC (adaptive transform coding) system), and a signal for cancelling the signals of the advertisement sound and the like is coded in accordance with a second coding system (for example, a system obtained by adding encipherment to the ATC 1 system). By employing the method including encipherment as the second coding system, the user of an ordinary reproducing device capable of decoding only a code string coded in accordance with the first coding system can listen to on trial the music signals including the advertisement sound and the like. The listener who uses a reproducing device capable of decoding also a code string coded in accordance with the second coding system and has purchased the right to use the key to decipherment can reproduce the pure music including no advertisement sound or the like.

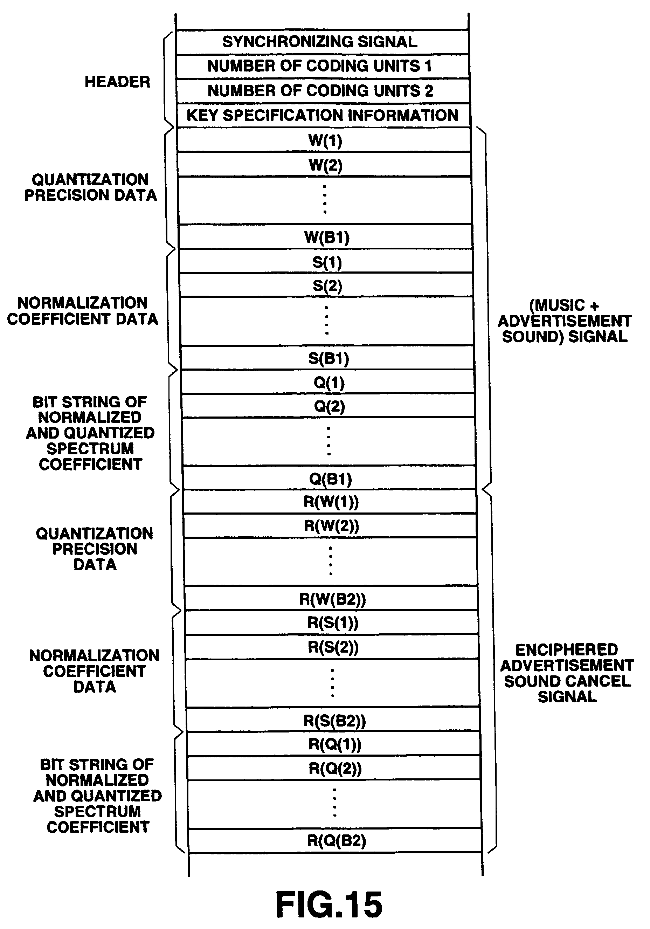

A specific example of the code string coded by the coding device as the embodiment of the present invention will now be described with reference to Fig.15.

In the specific example of the code string shown in Fig.15, the number of coding units B1 for coding a (music + advertisement sound) signal is coded as the number of coding units 1, and the number of coding units B2 for coding an advertisement sound cancel signal is coded as the number of coding units 2. After that, quantization precision data W(1) to W(B1), normalization coefficient data S(1) to S(B1), and bit strings Q(1) to Q(B1) of normalized and quantized spectrum coefficients of the (music + advertisement sound) signal are coded, and quantization precision data R(W(1)) to R(W(B2)), normalization coefficient data R(S(1)) to R(S(B2)), and bit strings R(Q(1)) to R(Q(B2)) of normalized and quantized spectrum coefficients of the enciphered advertisement sound cancel signal are coded.

In this embodiment, key specification information (for example, initial value information described with reference to Fig.1) indicating the decoding method is coded at the header part together with the number of coding units 1, the number of coding units 2 and a synchronizing signal. In this embodiment, to simplify the description, the first coding system and the second coding system are shown in Fig.15 as if they were the same system except for the encipherment part. However, in the first coding system and the second coding system, different methods may be employed for other parts than the encipherment part. Actually, it is desired to improve the coding efficiency of the advertisement sound cancel signal in order to improve the overall coding efficiency. Another embodiment in consideration of this feature will be described later.

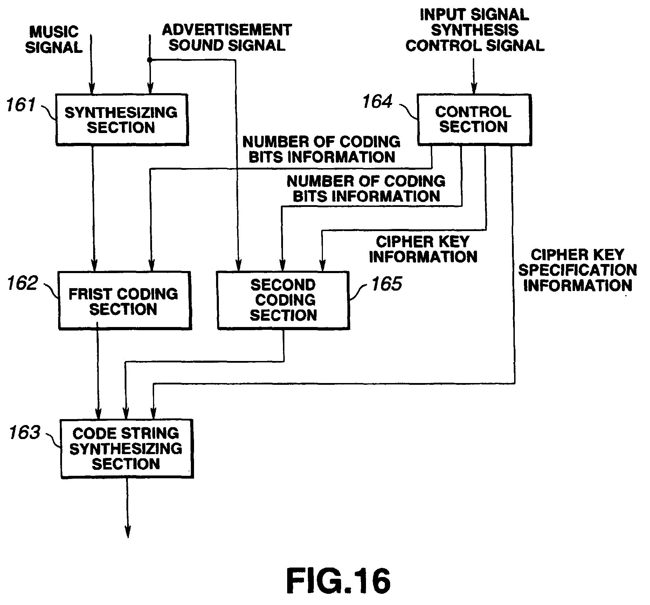

Fig.16 shows a specific example of the coding device for generating the code string of Fig.15. As input signals, a music signal and an advertisement sound signal are supplied. A synthesizing section 161 synthesizes the music signal and the advertisement sound signal and sends the synthesized signal to a first coding section 162. The first coding section 162 codes the signal by using the ATC 1 system in accordance with the number of coding bits information supplied from a control section 164. The advertisement sound signal is also sent to a second coding section 165 and coded by using the ATC 1 system. The control section 164 receives input signal synthesis control information from outside and determines the number of coding bits information by using a method which will be later described. The control section 164 then sends the determined number of coding bits information to the first coding section 162 and the second coding section 165. Moreover, the control section 164 holds a table for associating cipher key specification information with cipher key information, and arbitrarily selects cipher key specification information from the table. The control section 164 then sends the selected cipher key specification information to a code string synthesizing section 163, and sends the associated cipher key information to the second coding section 165.

The second coding section 165 codes the signal for cancelling the advertisement sound signal (for example, the advertisement sound signal itself) by using the ATC 1 system in accordance with the number of coding bits information inputted from the control section 164, and then enciphers the coded signal in accordance with the cipher key information. The code string synthesizing section 163 synthesizes the coded data of the (music + advertisement sound) signal outputted from the first coding section 162, the enciphered coded data of the advertisement sound cancel signal outputted from the second coding section 165, and the cipher key specification information, thus generating a code string as shown in Fig.15.

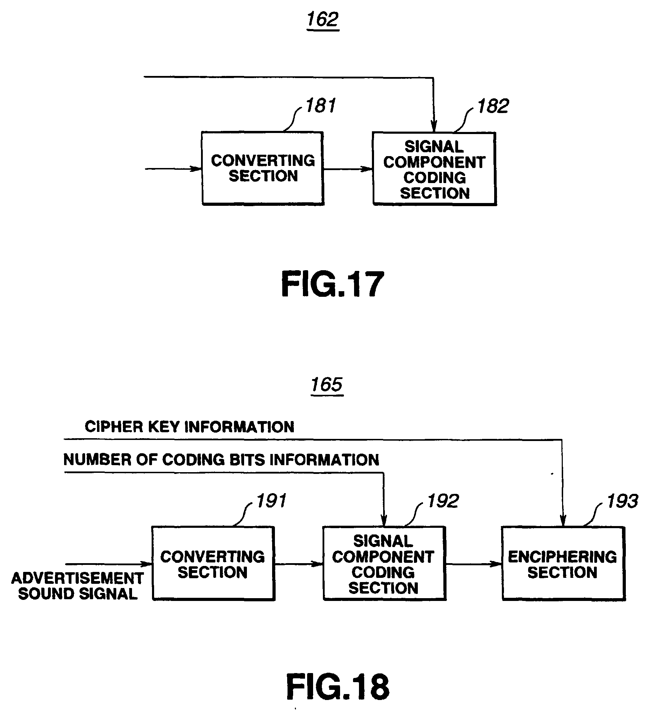

Fig.17 shows a specific example of the first coding section 162 of Fig.16. A converting section 181 converts the inputted (music + advertisement sound) signal to spectral components. A signal component coding section 182 codes the inputted spectral components by using the ATC 1 system in accordance with the number of coding bits information, and outputs the coded spectral components to the code string synthesizing section 163. The converting section 181 is constituted as shown in Fig.6 and the signal component coding section 182 is constituted as shown in Fig.7.

The second coding section 165 is constituted, for example, as shown in Fig.18. A converting section 191 thereof converts the inputted advertisement sound signal to spectral components and outputs the spectral components to a signal component coding section 192. The signal component coding section 192 codes the advertisement sound signal inputted from the converting section 191 by using the ATC 1 system in accordance with the number of coding bits information inputted from the control section 164, and outputs the coded signal to an enciphering section 193. The enciphering section 193 enciphers the code string inputted from the signal component coding section 192 on the basis of the cipher key information supplied from the control section 164, and outputs the enciphered code string to the code string synthesizing section 163. As an enciphering method, a method for taking an exclusive OR of a pseudo random bit string and a code string can be employed, as shown in Fig.1.

The converting section 191 and the signal component coding section 192 are constituted as shown in Figs.6 and 7, respectively.

The code string synthesizing section 163 synthesizes a code string from the (music + advertisement sound) signal inputted from the first coding section 162, the signal obtained by enciphering the advertisement sound cancel signal and outputted from the second coding section 165, and the cipher key specification information outputted from the control section 164, as shown in Fig.15, and then outputs the resultant code string.

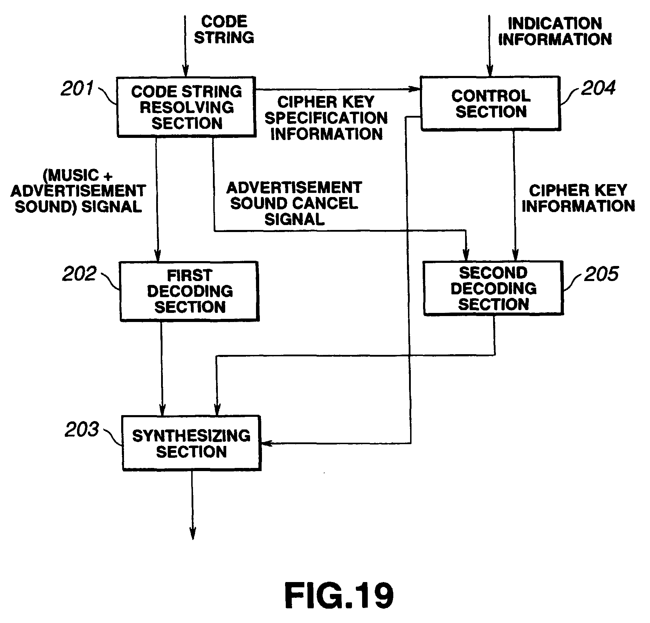

Fig.19 shows a specific example of a decoding device for reproducing only music signals from the code string of Fig.15 and is constituted by the ATC decoder 18 of Fig.4. A code string resolving section 201 resolves a code string obtained by coding the (music + advertisement sound) signal, a code string obtained by coding the advertisement sound cancel signal, and cipher key specification information from an inputted code string. The code string resolving section 201 sends the code string obtained by coding the (music + advertisement sound) signal to a first decoding section 202, the code string obtained by coding the advertisement sound cancel signal to a second decoding section 205, and the cipher key specification information to a control section 204. The control section 204 has the same table as that of the control section 164 of Fig.16 for associating the cipher key specification information with the cipher key information and can reproduce the cipher key information from the cipher key specification information. The control section 204 sends a decoding indication and the cipher key information to the second decoding section 205 by a method which will be described later, on the basis of indication information from the user for indicating whether or not to cancel the advertisement sound and reproduction permission information P stored in the control section 204 itself. The first decoding section 202 decodes the (music + advertisement sound) signal from the code string obtained by coding the (music + advertisement sound) signal by using the ATC 1 system. The second decoding section 205 decodes the cipher of the code string obtained by coding the advertisement sound cancel signal, on the basis of the decoding indication and the cipher key information. Then, the second decoding section 205 decodes the advertisement sound cancel signal in accordance with the ATC 1 system.

If the decoding indication information instructs the second decoding section 205 not to carry out cipher decoding, the second decoding section 205 generates an output signal having the magnitude of 0. A synthesizing section 203 synthesizes two signals, that is generates one signal from two signals. In this example, the synthesizing section 203 generates an output signal by subtracting the advertisement sound cancel signal outputted from the second decoding section 205 from the (music + advertisement sound) signal outputted from the first decoding section 202.

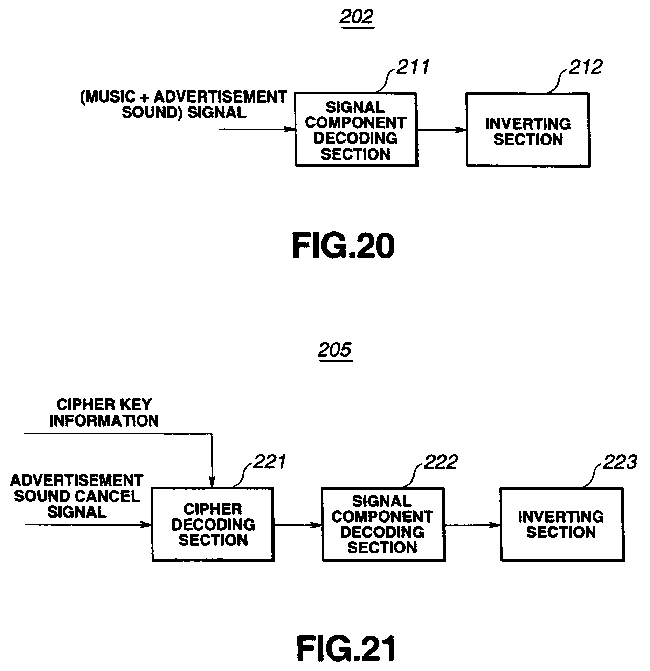

Fig.20 shows an exemplary structure of the first decoding section 202. A signal component decoding section 211 decodes the code string inputted from the code string resolving section 201 in accordance with the ATC 1 system and outputs the decoding result to an inverting section 212. The inverting section 212 inverts the spectral components inputted from the signal component decoding section 211 to a signal on the time base and outputs the resultant signal.

The signal component decoding section 211 and the inverting section 212 are constituted as shown in Figs.9 and 10, respectively.

Fig.21 shows a specific example of the second decoding section 205 of Fig.19. A cipher decoding section 221 corresponds to the enciphering section 193 of Fig.18 and carries out cipher decoding based on the decoding indication information. For cipher decoding, it suffices to take an exclusive OR of a pseudo random bit string generated by using the cipher key information and a code string as shown in Fig.2. However, as described above, if the decoding indication information instructs the second decoding section 205 not to carry out cipher decoding, the magnitude of a signal outputted from an inverting section 223 is made zero. Therefore, in this example, if the decoding indication information instructs the cipher decoding section 221 not to carry out cipher decoding, the cipher decoding section 221 sends a signal component decoding section 222 a code string which causes the magnitude of the signal outputted from the inverting section 223 to be zero.

If cipher decoding is indicated, the cipher decoding section 221 decodes the code string of the advertisement sound signal enciphered and coded in accordance with the ATC 1 system, which is inputted from the code string resolving section 201, in accordance with the cipher key information inputted from the control section 204, and outputs the decoded signal to the signal component decoding section 222. The signal component decoding section 222 decodes the inputted advertisement sound signal in accordance with the ATC 1 system. The inverting section 223 carries out processing for converting the spectral components inputted from the signal component decoding section 222 to a signal on the time base.

The signal component decoding section 222 and the inverting section 223 are constituted as shown in Figs.9 and 10, respectively.

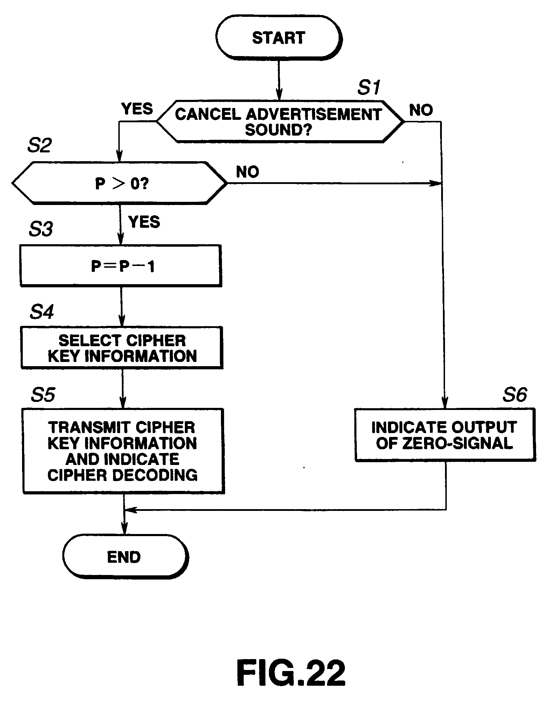

Fig.22 is a flowchart showing an example of processing in which the control section 204 of Fig.19 outputs cipher decoding indication information to the second decoding section 205. At step S1, the control section 204 discriminates whether or not to cancel the advertisement sound on the basis of the indication information as to whether or not to cancel the advertisement sound. If the result is NO, the control section proceeds to step S6 and instructs the second decoding section 205 to output a zero-signal. If result of discrimination at step S1 is YES, the control section 204 proceeds to step S2 and discriminates whether or not the value of the reproduction permission information P stored in the control section 204 itself is greater than 0.

The value of P represents the number of times the signal component decoding section 112 of Fig.19 (the magneto-optical disc device 30 of Fig.4) can reproduce the music including no advertisement sound. This value of P is provided from an authorized person to a user who paid the fee. If it is discriminated at step S2 that the value of P is not greater than 0, the control section 204 proceeds to step S6 and instructs the second decoding section 205 to output a zero-signal. If the value of P is greater than 0, the control section 204 proceeds to step S3 and subtracts 1 from the value of P. Then, the control section 204 proceeds to step S4 and reads out from the table the cipher key information corresponding to the cipher key specification information supplied from the code string resolving section 201. Then, at step S5, the control section 204 instructs the second decoding section 205 to decode the advertisement sound cancel signal and sends the cipher key information to the second decoding section 205.

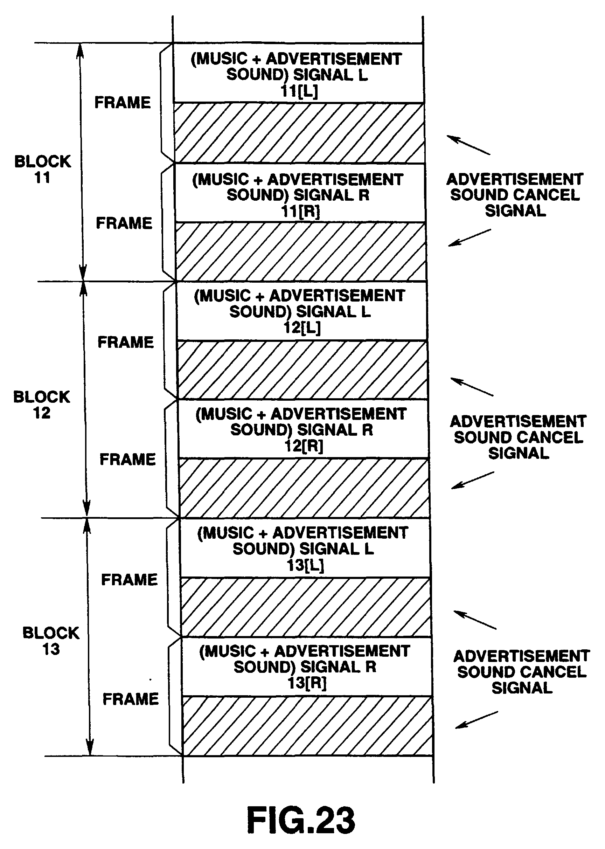

In the above-described embodiment the code string of Fig.15 is used which is obtained by coding the (music + advertisement sound) signal and the advertisement sound cancel signal in accordance with the same coding system except for the encipherment part. Hereinafter, an embodiment in which these signals are coded in accordance with different coding systems will be described with reference to Fig.23.

In the embodiment of Fig.23, a (music + advertisement sound) signal obtained by adding a monaural advertisement sound to a stereo music signal is coded as a stereo signal in accordance with a coding system (ATC 1 system) with a short conversion block length, and data of one block of each channel is recorded in one frame.

On the other hand, an advertisement sound cancel signal is converted as a signal of one channel with a block length twice that of the (music + advertisement sound) signal, and then a tonal component and the other component (non-tonal component) are separated. After that, the advertisement sound cancel signal is efficiently coded by variable-length coding in accordance with a coding system (for example, ATRAC 2 system, hereinafter referred to as ATC 2 system) having high compression efficiency. Data of one block is recorded over two frames.

Each frame length is a fixed length, and the leading position of each frame of the (music + advertisement sound) signal is located every predetermined bytes.

It is natural that the advertisement sound signal is positioned at the center. In the case where such sound signal is added to the stereo music signal, the advertisement sound cancel signal can be commonly used for the L-channel and the R-channel. Therefore, the quantity of bits of codes for the advertisement sound cancel signal can be reduced and the quantity of bits of codes for the (music + advertisement sound) signal can be increased accordingly. Thus, the sound quality can be improved. Also, since the advertisement sound cancel signal is coded in accordance with the coding system (ATC 2 system) having high compression efficiency, the quantity of bits of codes for the advertisement sound cancel signal can be reduced and the quantity of bits of codes for the (music + advertisement sound) signal can be increased accordingly. Thus, the sound quality can be improved. On the other hand, since the (music + advertisement sound) signal needs to be listened to particularly by a large number of people, it is convenient that the (music + advertisement sound) signal can be reproduced by means of inexpensive hardware even though it is coded in accordance with the coding system (ATC 1 system) with a relatively low compression rate.

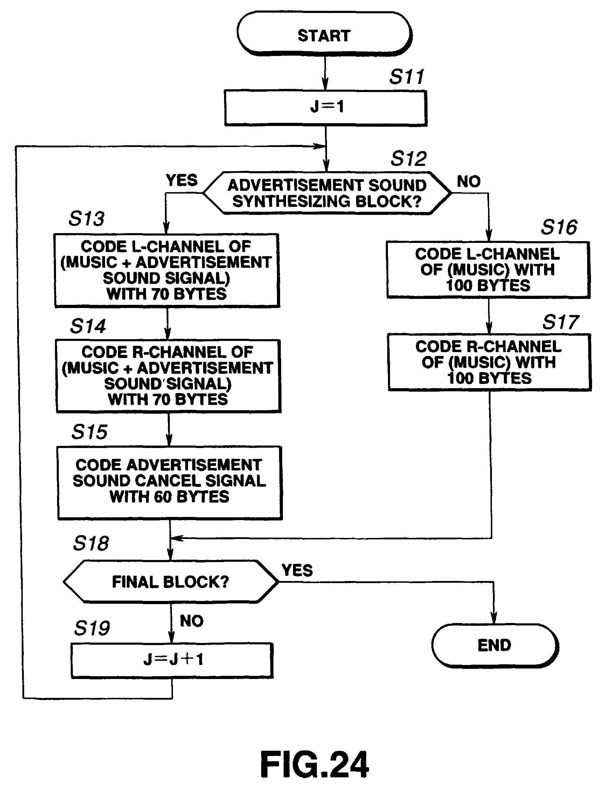

Fig.24 is a flowchart showing an example of processing in which the control section 164 of Fig.16 indicates the quantity of data for coding to the first coding section 162 and the second coding section 165 in order to produce the code string of Fig.23. At step S11, the control section 164 sets J expressing the block number at an initial value of 1. After that, the control section 164 proceeds to step S12 and discriminates whether or not the block is a block for synthesizing the advertisement sound on the basis of the input signal synthesis control information. If the result is YES, the control section 164 proceeds to steps S13, S14 and S15. That is, the control section 164 controls the first coding section 162 and the second coding section 165 to code the L-channel and the R-channel of the (music + advertisement sound) signal with 70 bytes each and to code the advertisement sound cancel signal with 60 bytes. Then, the control section 164 proceeds to step S18. On the other hand, if the block is not a block for synthesizing the advertisement sound, the control section 164 causes the L-channel and the R-channel of the music signal to be coded with 100 bytes each at steps S16 and S17 and then proceeds to step S18. At step S18, the control section 164 discriminates whether the block is the final block or not. If the result is YES, the processing ends. If the result is NO, the control section 164 proceeds to step S19 and increases the value of J by 1. Then, the control section 164 returns to step S12 and repeats the subsequent processing.

Meanwhile, in the case where the advertisement sound is cancelled by the advertisement sound cancel signal, if the advertisement sound needs to be inserted into a silent portion of the music data, quantization noise generated with respect to the advertisement sound signal and quantization noise generated with respect to the advertisement sound cancel signal do not perfectly offset each other, and there is no signal (music) for masking the noise. Therefore, the noise might be perceptible in the silent section of the music.

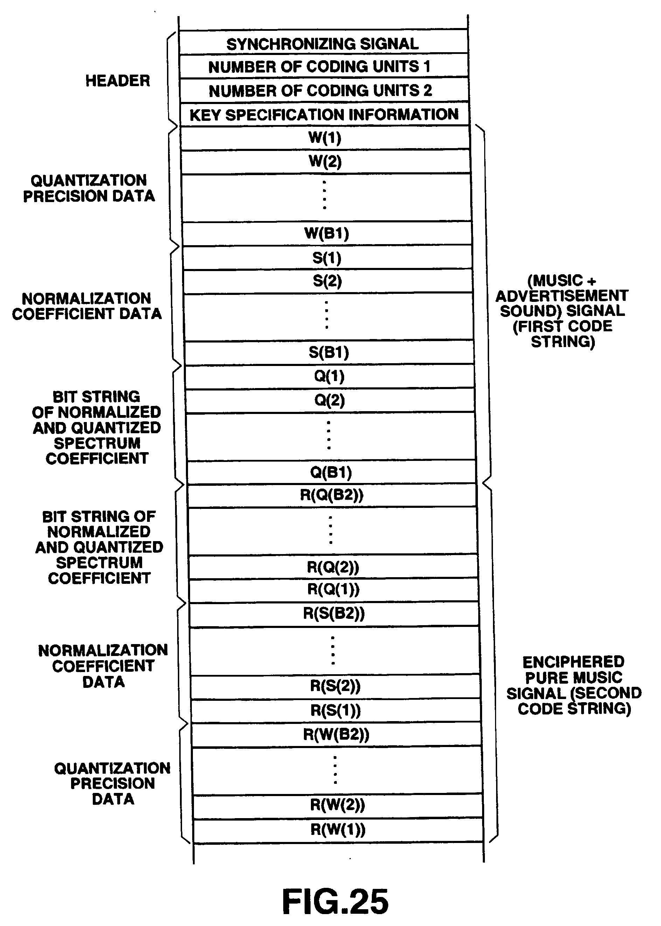

Thus, instead of the advertisement cancel signal of Fig.15, a pure music signal can be coded and transmitted as shown in Fig.25. A code string of Fig.25 is constituted by a header, a (music + advertisement sound) signal coded in accordance with the ATC 1 system, and a pure music signal coded in accordance with the ATC 1 system. The header includes a synchronizing signal, the number of coding units (number of coding units 1) for the synthetic signal made up of the music and the advertisement sound signal, the number of coding units (number of coding units 2) for the pure music signal, and key specification information.

The (music + advertisement sound) signal includes quantization precision data (W(1) to W(B1)), normalization coefficient data (S(1) to S(B1)), and spectrum coefficients (Q(1) to Q(B1)). This (music + advertisement sound) signal is a narrow-band signal from which high-frequency components are removed and consisting only of low-frequency components as described above. The pure music signal includes enciphered spectrum coefficients (R(Q(B2)) to R(Q(1))), enciphered normalization coefficient data (R(S(B2) to R(S(1))), and enciphered quantization precision data (R(W(B2)) to R(W(1))). This pure music signal is a broad-band signal including all the signal components up to high-frequency components.

In the case where the acoustically sufficient sound quality is secured, even when the narrow-band signal is used as the pure music signal, a sound of higher sound quality than the (music + advertisement sound) signal can be provided to the user because the advertisement sound is not combined.

In the example of Fig.25, the data of the pure music signal is arranged in the order (R(Q(B2)), ..., R(Q(2)), R(Q(1))) opposite to the order of time series (R(Q(1)), R(Q(2)), ..., R(Q(B2))). Each frame length is a fixed length, and the leading position and the end position of the frame are predetermined. Therefore, with such arrangement, the leading position of the pure music data can be easily specified. That is, the leading position of the pure music data need not be calculated by arithmetic operation as the position immediately after the final data Q(B1) of the (music + advertisement sound) signal. (In other word, backward reproduction from the final data R(W(1)) may be regularized.)

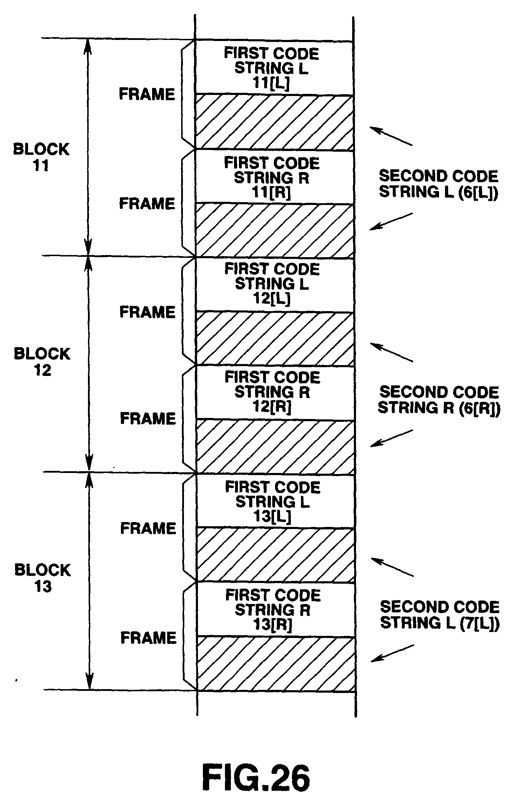

In the example of Fig.25, both the (music + advertisement sound) signal and the pure music signal are coded in accordance with the ATC 1 system. However, the ATC 2 system of higher efficiency can also be used for coding the pure music signal, as shown in Fig.26. In this case, the conversion block length is twice that of the ATC 1 system. In this example, too, the reproducing device for reproducing a first code string obtained by coding the (music + advertisement sound) signal ignores a second code string obtained by coding the pure music signal, and reproduces only the (music + advertisement sound) signal. Since the coding efficiency of the second code string is improved, a greater number of bits than for the first code string can be allocated. Therefore, the sound quality of the (music + advertisement sound) signal can be improved in comparison with the example of Fig.25.

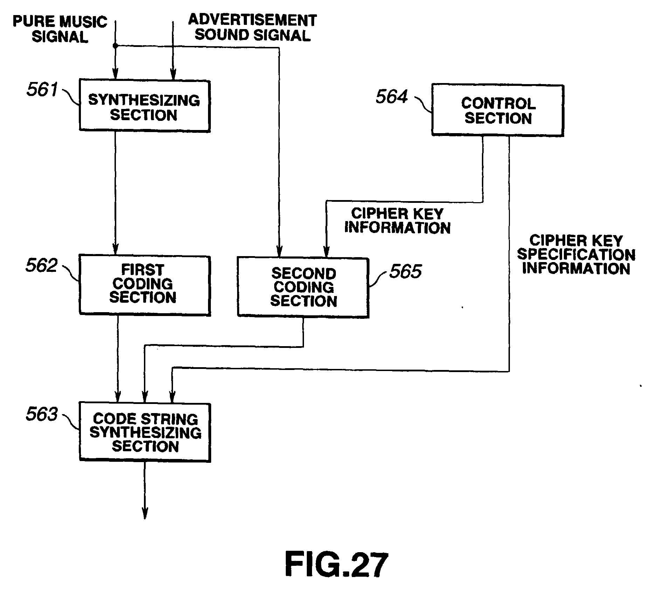

In the case where coding as shown in Fig.26 is carried out, a coding device is constituted as shown in Fig.27. Specifically, in the example of Fig.27, a pure music signal is inputted to a synthesizing section 561 and a second coding section 565, and an advertisement sound signal is inputted to the synthesizing section 561. The synthesizing section 561 synthesizes the inputted pure music signal and advertisement sound signal and outputs a (music + advertisement sound) signal to a first coding section 562.

The first coding section 562 codes the inputted (music + advertisement sound) signal in accordance with the ATC 1 system and outputs the coded signal to a code string synthesizing section 563.

The second coding section 565 codes the inputted pure music signal in accordance with the ATC 2 system and then enciphers the coded signal on the basis of cipher key information supplied from a control section 564. The second coding section 565 then outputs the coded and enciphered signal to the code string synthesizing section 563.

The code string synthesizing section 563 generates a code string by synthesizing the (music + advertisement sound) signal which is obtained by synthesizing the music signal and advertisement sound signal, coded in accordance with the ATC 1 system and inputted from the first coding section 562, the pure music signal which is coded in accordance with the ATC 2, enciphered and outputted from the second coding section 565, and cipher key specification information outputted from the control section 564. Then, the code string synthesizing section 563 outputs the generated code string.

The first coding section 562 is constituted by the converting section 181 and the signal component coding section 182, similarly to the case of Fig.17. The converting section 181 is constituted by the band splitting filter 81 and forward spectrum converting sections 82-1, 82-2, similarly to the case of Fig.6. The signal component coding section 182 is constituted by the normalizing section 91, the quantization precision determining section 92 and the quantizing section 93, similarly to the case of Fig.7.

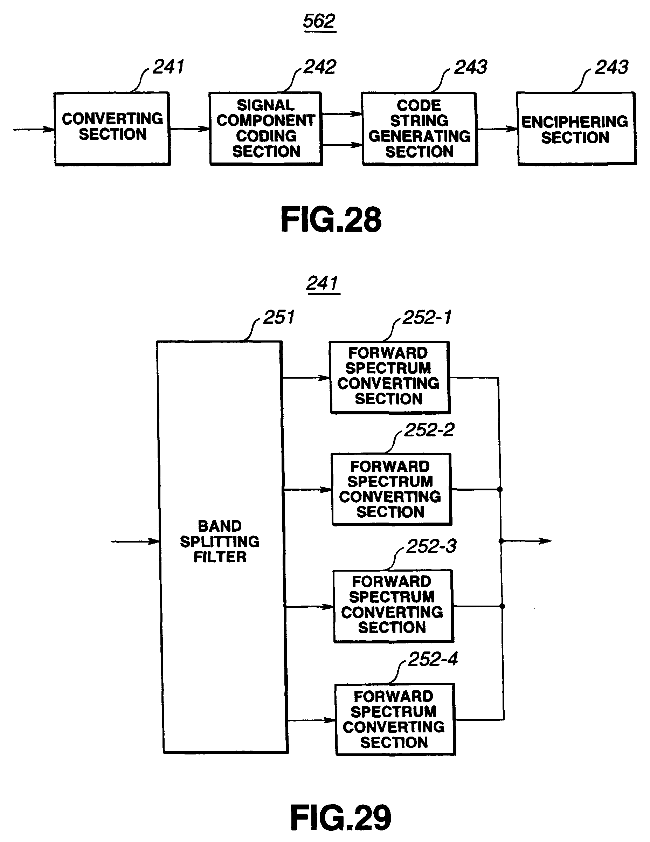

The second coding section 565 is constituted as shown in Fig.28.

A converting section 241 converts the inputted pure music signal to spectral components and outputs the spectral components to a signal component coding section 242. The signal component coding section 242 splits the inputted spectral components into a tonal component and a non-tonal component, codes the respective components in accordance with the ATC 2 system, and outputs the coded components to a code string generating section 243.

The code string generating section 243 generates a code string from the tonal component and non-tonal component inputted from the signal component coding section 242 and outputs the code string to an enciphering section 244. The enciphering section 244 enciphers the code string inputted from the code string generating section 243 and outputs the enciphered code string to the code string synthesizing section 563.

The operation thereof will now be described. The converting section 241 converts an inputted signal on the time base to spectral components (a signal on the frequency base) and outputs the spectral components to the signal component coding section 242. The signal component coding section 242 splits the inputted spectral components into a tonal component and a non-tonal component, codes the respective components, and outputs the coded components to the code string generating section 243. The code string generating section 243 synthesizes the code of the tonal component and the code of the non-tonal component and outputs the synthesis result as a code string to the enciphering section 244. The enciphering section 244 enciphers the inputted code string on the basis of the cipher key information from the control section 564 and outputs the enciphered code string to the code string synthesizing section 563.

Fig.29 shows an exemplary structure of the converting section 241. In this example, an inputted signal is split by each predetermined frequency band by a band splitting filter 251 (in this example, split into four frequency bands). Forward spectrum converting sections 252-1 to 252-4 converts the signals of four frequency bands to spectral components and output the spectral components to the signal component coding section 242.

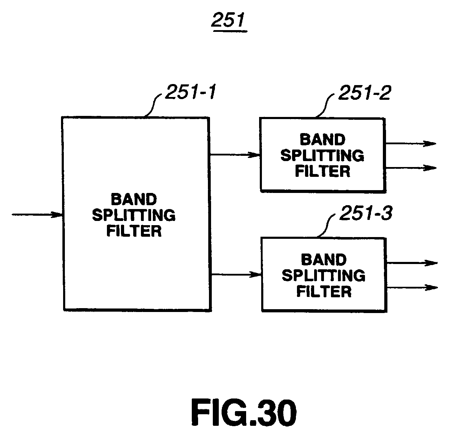

The band splitting filter 251 may be constituted by band splitting filters 251-1 to 251-3, as shown in Fig.30. In this example, an inputted signal is split into two signals, that is, a signal of the higher frequency band and a signal of the lower frequency band, by the band splitting filter 251-1. The signal of the higher frequency band is further split into a signal of the higher frequency band and a signal of the lower frequency band by the band splitting filter 251-2. The signal of the lower frequency outputted from the band splitting filter 251-1 is further split into a signal of the higher frequency band and a signal of the lower frequency band by the band splitting filter 251-3.

The band splitting filters 251-1 to 251-3 of Fig.30 are constituted by QMFs (quadrature mirror filters). However, the entire band splitting filter 251 of Fig.29 may be constituted by a PQF (polyphase quadrature filter). In any case, the signal outputted from the band splitting filter 251 or the signal outputted from the band splitting filters 251-2, 251-3 is a signal obtained by 1/4-thinning of the signal inputted to the band splitting filter 251 or the signal inputted to the band splitting filter 251-1. It is possible to obtain high frequency resolution while restraining the quantity of a buffer memory necessary for spectrum conversion processing.

The outputs of the forward spectrum converting sections 252-1 to 252-4 are, for example, as shown in Fig.12. In Fig.12, the vertical axis represents the level of the absolute value of MDCT spectrum in the form of dB. The input signal is converted to 64 spectral signals for each predetermined time block.

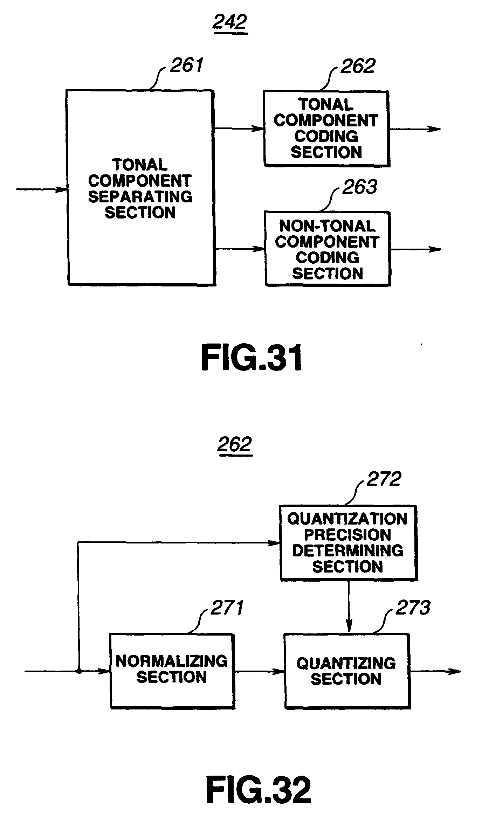

The signal component coding section 242 of Fig.28 is constituted, for example, as shown in Fig.31. In this exemplary structure, the forward spectral component inputted from the converting section 241 is split into a tonal component and a non-tonal component by a tonal component separating section 261. The tonal component is inputted to and coded by a tonal component coding section 262. The non-tonal component is inputted to and coded by a non-tonal component coding section 263.

In Fig.12, three tonal components (tonal components 1 to 3) are separated. These tonal components are coded together with the position data (position data 1 to 3) on the frequency base.

Generally, in order to prevent deterioration in the sound quality, it is necessary to quantize a tonal signal component as a signal component in which the energy is concentrated at a small number of spectra, with a very high precision in comparison with the other spectral component (non-tonal component). The spectrum coefficient in each coding unit after separating the tonal component is quantized with a relatively small number of steps without deteriorating the sound quality perceived by the auditory sense. Thus, audio signals can be efficiently coded at a high compression rate without generating substantial acoustic deterioration.

In Fig.12, only a small number of spectra are shown in order to simplify the drawing. However, in the actual tonal component signal, the energy is concentrated at several spectrum coefficients in the coding unit including tens of spectra. Therefore, the increase in the data quantity due to separation of such tonal component is relatively small and the overall coding efficiency can be improved by separating the tonal component.

If the frequency resolution is high, the energy is concentrated accordingly at a specified spectral signal. Therefore, the method of separating the tonal component becomes more effective.

As shown in Fig.12, the input signal is converted to 64 spectral signals for each predetermined time block. Each spectral signal is normalized every eight bands (coding units) "1" to "8" and is quantized. By changing the quantization precision for each coding unit depending on the distribution of frequency components, deterioration in the sound quality can be minimized and acoustically efficiency coding can be carried out.

The tonal component coding section 262 is constituted as shown in Fig.32, for example. (The non-tonal component coding section 263 is similarly constituted.) The tonal component outputted from the tonal component separating section 261 is inputted to a normalizing section 271 and a quantization precision determining section 272. The normalizing section 271 normalizes each level for each band (coding unit) with reference to the maximum value in the band, and outputs the normalized level to a quantizing section 273. The quantization precision determining section 272 determines quantization precision in the inputted band (coding unit) and outputs the determined quantization precision to the quantizing section 273. The quantizing section 273 quantizes the normalized signal level inputted from the normalizing section 271 in accordance with the quantization precision inputted from the quantization precision determining section 272. The quantizing section 273 outputs normalization coefficient information and quantization precision information in addition to the quantized signal component, to the code string generating section 243 on the subsequent stage.

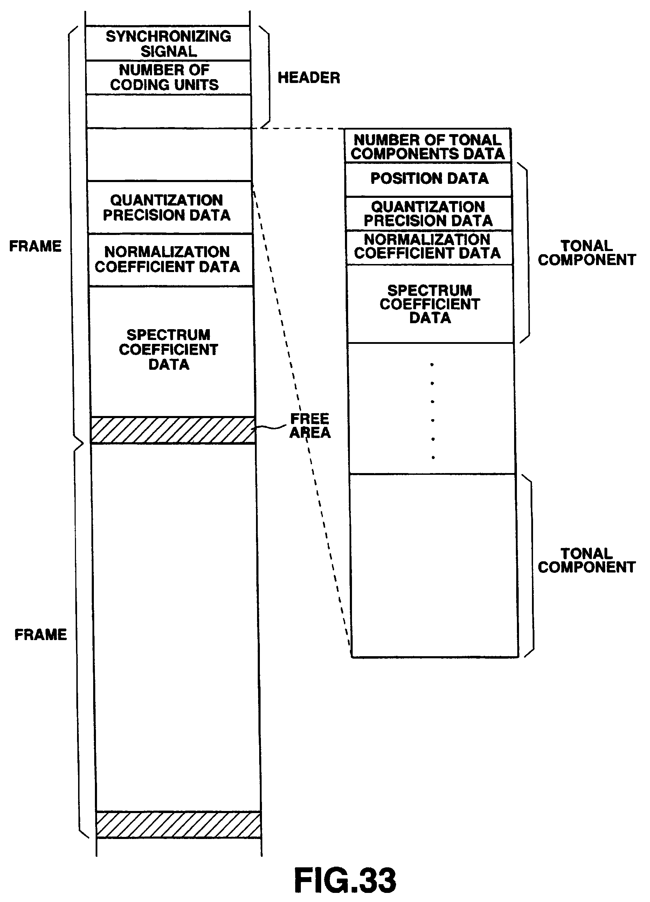

The code string generating section 243 of Fig.28 formats the generated code string, using a frame consisting of a predetermined number of bytes as a transmission unit, as shown in Fig.33. The number of bytes actually used for coding for each frame is determined in accordance with the number of coding units and the quantization precision data. If the number of actually used bytes is smaller than the number of bytes allocated to each frame, a free area is generated at the last part of each frame. In this free area, byte data having a value of 0 can be recorded as dummy data. To improve the sound quality, this dummy data is minimized. However, it is also possible to intentionally secure the free area by adjusting the quantization precision data. Also, by causing the number of quantization bits to be included as the quantization precision information in the code string and then quantizing each spectral signal with the number of quantization bits, the total number of bits required for each frame can be easily calculated. Therefore, the size of the free area can be easily calculated.

By allocating a relatively a short code length to a spectral signal of a high frequency from among the quantized spectral signals, and allocating a relatively a long code length to a spectral signal of a low frequency, the coding efficiency can be improved. Also, by taking a long conversion block length, the quantity of sub-information such as quantization precision information and normalization coefficient information can be relatively reduced and the frequency resolution can be improved. Therefore, the quantization precision can be minutely controlled on the frequency base and the coding efficiency can be improved.

In the example of Fig.33, a header is arranged at the leading end of each frame. In the header, a synchronizing signal and the number of coding units included in the frame are described.

Next to the header, a tonal component is described. This tonal component includes the number of tonal components data and data of each tonal component. The data of each tonal component includes position data indicating the position of the tonal component, quantization precision data, normalization coefficient data, and spectrum coefficient data.

Next to the tonal component data, quantization precision data, normalization coefficient data, and spectrum coefficient data of a non-tonal component are arranged.

The enciphering section 244 of Fig.28 is constituted as shown in Fig.1, for example. The control section 51 of Fig.1 corresponds to the control section 564 of Fig.27. The enciphered code string thus generated by the second coding section is sent to the code string synthesizing section 563 and synthesized with the first code string. Thus, the code string of the format shown in Fig.26 is generated.

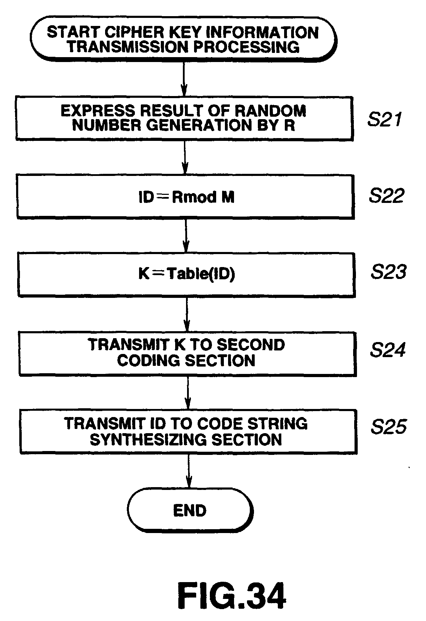

Fig.34 shows cipher key information transmission processing carried out by the control section 564 of Fig.27. First, at step S21, the control section 564 generates a random number in accordance with a command from the system controller 22 and expresses the generated random number by R. At step S22, the control section 564 divides the random number R by a predetermined value M and uses the remainder as cipher key specification information ID.

Next, at step S23, the control section 564 converts the cipher key specification information ID calculated at step S22 to corresponding cipher key information K with reference to a table provided therein. At step S24, the control section 564 transmits the cipher key information K calculated at step S23 to the second coding section 565. At step S25, the control section 564 outputs the cipher key specification information ID calculated at step S22 to the code string synthesizing section 563.

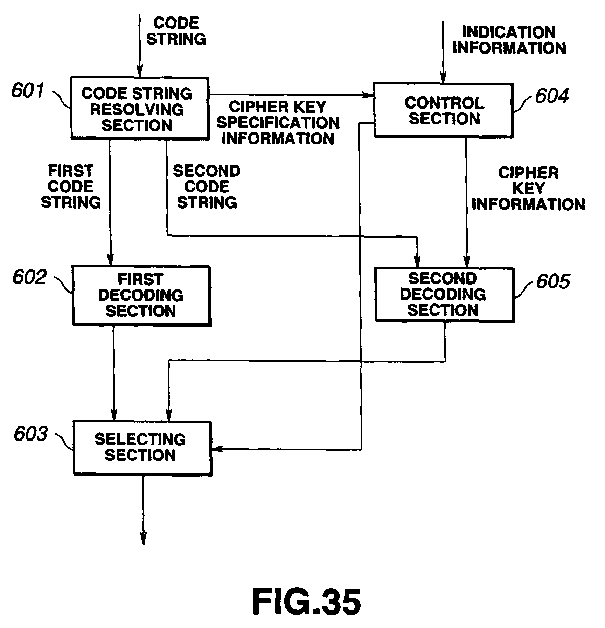

In the case where coding as shown in Fig.26 is carried out, a decoding device for decoding such coding is constituted as shown in Fig.35. This decoding device is constituted by the ATC decoder 18. That is, a code string reproduced from the magneto-optical disc 11 is inputted to a code string resolving section 601, and a first code string, a second code string and cipher key specification information are extracted from the code string. The first code string is supplied to a first decoding section 602. The second code string is supplied to a second decoding section 605. The cipher key specification information is supplied to a control section 604. To the control section 604, indication information inputted by the user operating the key input operating section 23 is also inputted. When reproduction of the enciphered pure music signal is indicated from the user, the control section 604 generates cipher key information (pseudo random bit string) on the basis of the cipher key specification information (initial value information) inputted from the code string resolving section 601, and outputs the cipher key information to the second decoding section 605.

The second decoding section 605 decodes the enciphered pure music signal (second code string) inputted from the code string resolving section 601, on the basis of the cipher key information inputted from the control section 604, and outputs the decoded pure music signal to a selecting section 603. To the selecting section 603, the result of decoding of the non-enciphered (music + advertisement sound) signal (first code string) inputted from the code string resolving section 601 and decoded by the first decoding section 602 is also inputted. The selecting section 603 selects either the output of the first decoding section 602 or the output of the second decoding section 605 in accordance with a control signal from the control section 604, and outputs the selected output from the terminal 21 through the D/A converter 19 and the low-pass filter 20.

The first decoding section 602 is constituted as shown in Fig.20 similarly to the first decoding section 202 of Fig.19. The operation thereof is similar to the operation in the case of Fig.20. That is, the signal component decoding section 211 decodes the code string inputted from the code string resolving section 601 in accordance with the ATC 1 system and outputs the decoding result to the inverting section 212. The inverting section 212 inverts the spectral components inputted from the signal component decoding section 211 to a signal on the time base and outputs this signal.

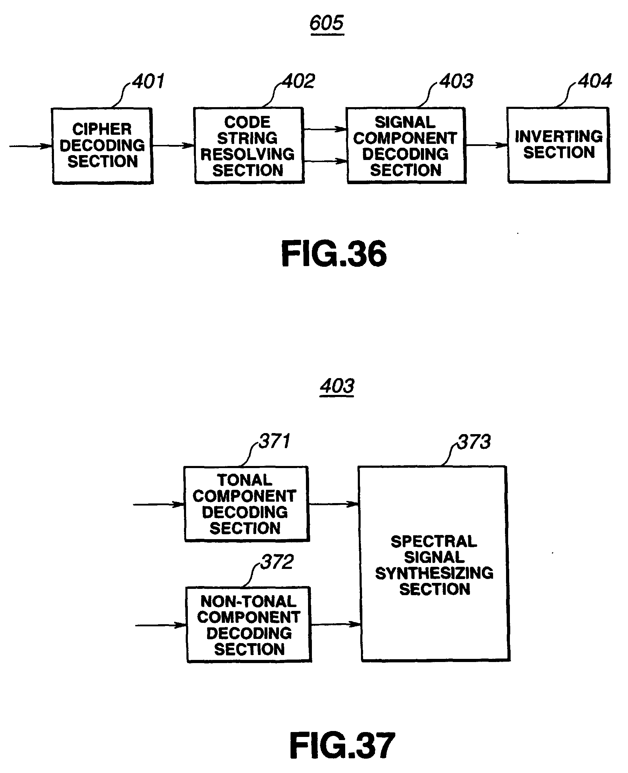

Fig.36 shows an exemplary structure of the second decoding section 605 of Fig.35. A cipher decoding section 401 decodes the second code string (pure music signal) inputted from the code string resolving section 601 in accordance with the cipher key information from the control section 604, and outputs the decoded code string to a code string resolving section 402. The code string resolving section 402 resolves the inputted code string into a code string of a tonal component and a code string of a non-tonal component.

A signal component decoding section 403 is constituted as shown in Fig.37, for example. The tonal component inputted from the code string resolving section 402 is inputted to a tonal component decoding section 371, and the non-tonal component is inputted to a non-tonal component decoding section 372. The tonal component decoding section 371 decodes the inputted tonal component in accordance with the ATC 2 system and outputs the decoding result to a spectral signal synthesizing section 373. Also, the non-tonal component decoding section 372 decodes the inputted non-tonal component in accordance with the ATC 2 system and outputs the decoding result to the spectral signal synthesizing section 373. The spectral signal synthesizing section 373 synthesizes the decoding result of the tonal component and the decoding result of the non-tonal component inputted thereto and outputs the synthesis result to an inverting section 404 of Fig.36.

The tonal component decoding section 371 and the non-tonal component decoding section 372 are constituted by the inverse quantizing section 131 and the inverse normalizing section 132, respectively, similarly to the case of Fig.9.

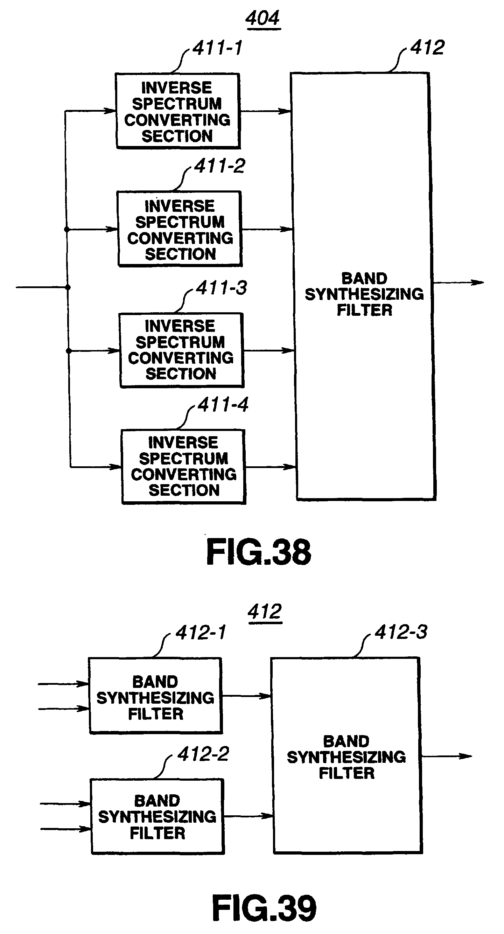

Since the pure music signal as a processing target is a broad-band music signal, the inverting section 404 is constituted by inverse spectrum converting sections 411-1 to 411-4 and a band synthesizing filter 412, as shown in Fig.38.

The band synthesizing filter 412 can be constituted by band synthesizing filters 412-1 to 412-3 made of QMF filters as shown in Fig.39, corresponding to the band splitting filter 251 of Fig.30. In the band synthesizing filter 412 of Fig.39, the band synthesizing filter 412-1 synthesizes signals of two higher frequency bands and the band synthesizing filter 412-2 synthesizes signals of two lower frequency bands. The band synthesizing filter 412-3 synthesizes the output of the band synthesizing filter 412-1 and the output of the band-synthesizing filter 412-2. In the case where the entire band splitting filter 251 of Fig.29 is constituted by a PQF filter, the band synthesizing filter 412 can be constituted by a PQF filter correspondingly.

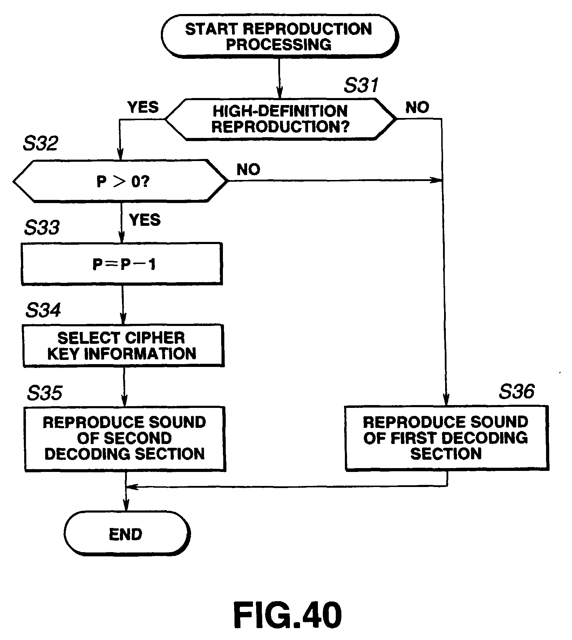

The operation of reproduction of the coded data shown in Fig.26 will now be described with reference to the flowchart of Fig.40. The user operates the key input operating section 23 to command whether to reproduce the encipheted pure music signal (chargeable) or to reproduce the non-enciphered (music + advertisement sound) signal (free of charge) for trial listening. This command is inputted from the system controller 22 to the control section 604 of the ATC decoder 18. At step S31, the control section 604 discriminates whether or not the currently commanded operation is reproduction of the music signal of high definition from the indication information from the system controller 22. If the currently commanded operation is reproduction of the (music + advertisement sound) signal (signal of the first code string of Fig.26), the control section 604 proceeds to step S36 and controls the selecting section 603 to select the output of the first decoding section 602.

That is, at this point, the first decoding section 602 decodes the signal of the first code string of Fig.26 inputted from the code string resolving section 601 in accordance with the ATC 1 system.

On the other hand, if reproduction of the music signal of high definition is commanded, the control section 604 proceeds to step S32 and discriminates whether the pre-stored value P is positive or not. This value P is a value supplied through a transmission medium or a recording medium as the user pays the predetermined fee. The enciphered chargeable information can be decoded (reproduced) for the number of times indicated by the value P. If the control section 604 discriminates that the stored value P is positive, the control section 604 proceeds to step S33 and makes decrement of P by 1. Then, at step S34, the control section 604 generates cipher key information from the table provided therein on the basis of the cipher key specification information (initial value) inputted from the code string resolving section 601, and outputs the generated cipher key information to the second decoding section 605. At step S35, the control section 604 controls the selecting section 603 to select and output the output of the second decoding section 605.

In this manner, the enciphered pure music signal is reproduced. Decrement of the value P by 1 is made every time this reproduction is carried out, and the value P consequently becomes 0. At this point, it is discriminated at step S32 that the value P is not greater than 0. In this case, the processing goes to step S36 and the music of low definition is reproduced even when the user commands reproduction of the music signal of high definition.

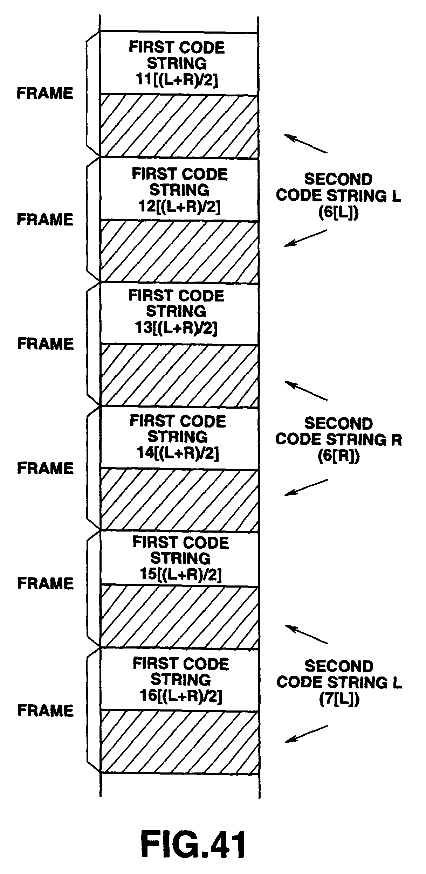

In the above description of the optimum embodiment, the format is constituted so that the (music + advertisement sound) signal of the left channel (L) and the (music + advertisement sound) signal of the right channel (R) are alternately recorded for each frame to form the first code string in Fig.26. However, the first code string signal is a signal for trial listening, and the signal constituting the stereo signal of the pure music signal is separately recorded as the second code string. Therefore, the signal of the first code string may also be recorded in one channel as a monaural signal of (L+R)/2, as shown in Fig.41.

Also, in the above description of the optimum embodiment, the (music + advertisement sound) signal and the pure music signal resolved by the code string resolving section 601 are decoded and the signal to be outputted is selected by the selecting section 603 in Fig.35. However, the selecting section 603 may be located after the code string resolving section 601 so as to output only the code string (first code string or second code string) indicated by the control section 604 to the first decoding section 602 or the second decoding section 605 as the corresponding decoding section, then decode only the first code string or the second code string, and output the decoded signal. With such structure, the buffer quantity, not shown, can be reduced in the case where the decoding device of Fig.35 is constituted by means of hardware. In the case where decoding device is constituted by means of software, either decoding is improved and therefore the quantity of arithmetic operation can be reduced.

Although acoustic signals are used in the above description, the present invention can also be applied to image signals.

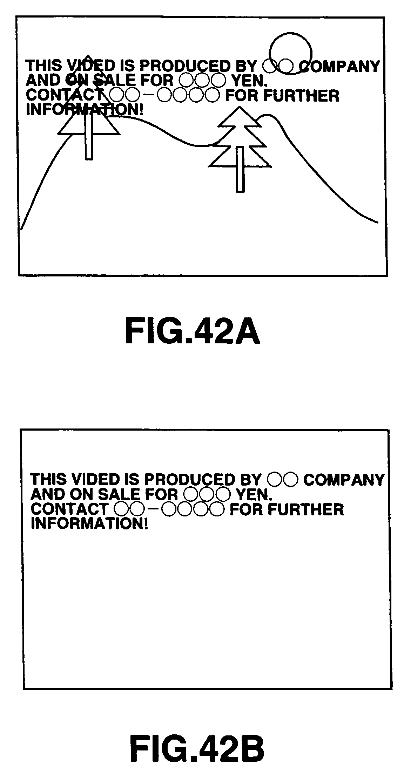

Specifically, Fig.42A shows an image produced by superimposing image information of advertisement characters on an image signal. Fig.42B shows image information of advertisement characters. Similar to the case of acoustic signals, the signal of the image produced by superimposing image information of advertisement characters on an image signal as shown in Fig.42A is coded and the signal for cancelling the advertisement character image as shown in Fig.42B is coded and enciphered so that these signals can be transmitted and reproduced similarly to the case of acoustic signals. The advertisement character information of Fig.42B may be data expressing character code, color data, position data and the like, instead of being coded as image information. Thus, the quantity of code bits for producing the cancel signal can be restrained, which is convenient.

Similarly, in the case of acoustic signals, a signal generated by so-called sound synthesis can be used as the advertisement sound signal. In this manner, the quantity of bits of codes for the cancel signal can be significantly reduced. However, to reproduce the (music + advertisement sound) signal which generates no awkward feeling during listening, it is better to code a sound gathered through a microphone.

In the above description, the advertisement sound signal or the advertisement character signal is used as the signal to be superimposed on the music signal or the image signal. However, it is a matter of source that other acoustic signals or image signals may be used. For example, a signal obtained by adding a high-frequency signal for improvement in the sound quality to an explanatory speech signal may be added to the music signal. In this manner, it is possible to provide more sufficient services to a person who paid the fee.

In the above description of the optimum embodiment, the second code string obtained by coding the cancel signal or the pure music signal is enciphered and recorded. However, since the second code string is not reproduced in normal reproduction, it is not necessary to encipher the second code string.

In the above description, the code string is recorded on a recording medium. However, the present invention can also be applied to the case where the code string is transmitted.

As providing media for providing a computer program for carrying out the above-described processing to the user, communication media such as a network and a satellite as well as recording media such as a magnetic disk, a CD-ROM and a solid state memory can be used.

According to the embodiment of the present invention as described above, a mixed signal generated by mixing a first signal and a second signal is coded, and information including a component for cancelling the second signal from the mixed signal is coded. Therefore, it is possible to provide information which normally enables reproduction of at least the signal generated by mixing the first signal and the second signal and enables cancellation of the second signal at a desired time.

Thus, when data such as music is used as the first signal while an advertisement sound or an explanatory speech is used as the second signal, the contents of the data such as music can be advertised in normal reproduction, and it is possible to provide the music alone to a person who wishes to enjoy the music including no advertisement sound by paying the fee.

Thus, the user can determine whether or not to obtain key information necessary for high-quality reproduction after confirming the contents of recorded information, and the software can be distributed more smoothly.

Also, according to the present invention, a first coded signal generated by coding a signal obtained by mixing a plurality of signals is decoded, and a second coded signal generated by coding information including a component for cancelling a part of the first coded signal is decoded. The respective decoded signals are synthesized. Therefore, it is possible to securely cancel a part of the plural signals and obtain only the other signals.

In addition, according to the present invention, a code string including a first coded signal generated by coding a signal obtained by mixing a plurality of signals and a second coded signal generated by coding information including a component for cancelling a part of the first coded signal is recorded on a recording medium. Therefore, an original signal and a signal for trial listening can be securely provided to the user.

Also, according to the present invention, a mixed signal generated by mixing a first signal and a second signal is coded, and a third signal of higher definition than that of the first signal is coded. Therefore, information for trial listening and information of higher definition can be provided while generation of noise is restrained.

In addition, according to the present invention, control is carried out to output a signal generated by decoding either a first coded signal and a second coded signal. Therefore, one of information for trial listening and information of higher definition can be securely selected without generating perceptible noise.

Moreover, according to the present invention, a code string including a first coded signal generated by coding a signal obtained by mixing a plurality of signals and a second coded signal generated by coding a signal of higher definition than the first coded signal is recorded on a recording medium. Therefore, a signal for trial listening and information for higher definition can be provided in the state where noise is imperceptible.

It is to be understood that the present invention is not limited to the above-described embodiments. For example, though audio signals are mainly used in the devices of the above-described embodiments, it is a matter of course that the present invention can also be applied to video signals and data signals.

## Claims

1. An information coding device comprising:
first coding means for coding a mixed signal obtained by mixing a first signal and a second signal; and
second coding means for coding information including a component for cancelling the second signal from the mixed signal.

2. The information coding device as claimed in claim 1, wherein the first coding means and the second coding means carry out coding in accordance with coding systems different from each other.

3. The information coding device as claimed in claim 1, wherein the second coding means carries out encipherment.

4. The information coding device as claimed in claim 1, wherein the signal coded by the first coding means is an acoustic signal.

5. The information coding device as claimed in claim 4, wherein the first and second coding means convert the acoustic signal to each block and code each block, and wherein each block length is different.

6. The information coding device as claimed in claim 4, wherein the signal coded by the first coding means and the signal coded by the second coding means differ from each other in the number of channels.

7. The information coding device as claimed in claim 1, wherein the signal coded by the first coding means is an image signal.

8. The information coding device as claimed in claim 7, wherein the information coded by the second coding means includes a character code.

9. An information coding method comprising:
a first coding step of coding a mixed signal obtained by mixing a first signal and a second signal; and
a second coding step of coding information including a component for cancelling the second signal from the mixed signal.

10. The information coding method as claimed in claim 9, wherein at the first coding step and the second coding step, coding is carried out in accordance with coding systems different from each other.

11. The information coding method as claimed in claim 9, wherein the second coding step includes encipherment.

12. The information coding method as claimed in claim 9, wherein the signal coded at the first coding step is an acoustic signal.

13. The information coding method as claimed in claim 12, wherein at the first and second coding steps, the acoustic signal is converted to each block and coded, and wherein each block length is different.

14. The information coding method as claimed in claim 12, wherein the signal coded at the first coding step and the signal coded at the second coding step differ from each other in the number of channels.

15. The information coding method as claimed in claim 9, wherein the signal coded at the first coding step is an image signal.

16. The information coding method as claimed in claim 15, wherein the information coded at the second coding step includes a character code.

17. A providing medium for providing a control command for causing an information processing device to carry out processing comprising:
a first coding step of coding a mixed signal obtained by mixing a first signal and a second signal; and
a second coding step of coding information including a component for cancelling the second signal from the mixed signal.

18. An information decoding device comprising:
first decoding means for decoding a first coded signal obtained by coding a signal generated by mixing a plurality of signals;
second decoding means for decoding a second coded signal obtained by coding information including a component for cancelling a part of the first coded signal; and
synthesis means for synthesizing the signal from the first decoding means and the signal from the second decoding means.

19. The information decoding device as claimed in claim 18, further comprising control means for controlling decoding operation carried out by the second decoding means and synthesizing operation carried out by the synthesis means.

20. The information decoding device as claimed in claim 18, wherein the first decoding means and the second decoding means decode signals of coding systems different from each other.

21. The information decoding device as claimed in claim 18, wherein the second decoding means decodes an enciphered second coded signal.

22. The information decoding device as claimed in claim 18, wherein the first coded signal is a signal obtained by coding an acoustic signal.

23. The information decoding device as claimed in claim 22, wherein the first and second coded signals are signals obtained by converting acoustic signals to each block and coding each block, and wherein each conversion length is different.

24. The information decoding device as claimed in claim 22, wherein a signal coded as the first coded signal and a signal coded as the second coded signal differ from each other in the number of channels.

25. The information decoding device as claimed in claim 18, wherein the first coded signal is a signal obtained by coding an image signal.

26. The information decoding device as claimed in claim 25, wherein the second coded signal is a signal obtained by coding information including a character code.

27. An information decoding method comprising:
a first decoding step of decoding a first coded signal obtained by coding a signal generated by mixing a plurality of signals;
a second decoding step of decoding a second coded signal obtained by coding information including a component for cancelling a part of the first coded signal; and
a synthesis step of synthesizing the signal from the first decoding step and the signal from the second decoding step.

28. The information decoding method as claimed in claim 27, further comprising a control step of controlling decoding operation carried out at the second decoding step and synthesizing operation carried out at the synthesis step.

29. The information decoding method as claimed in claim 27, wherein at the first decoding step and the second decoding step, signals of coding systems different from each other are decoded.

30. The information decoding method as claimed in claim 27, wherein the second decoding step includes decoding of an enciphered second coded signal.

31. The information decoding method as claimed in claim 27, wherein the first coded signal is a signal obtained by coding an acoustic signal.

32. The information decoding method as claimed in claim 31, wherein the first and second coded signals are signals obtained by converting acoustic signals to each block and coding each block, and wherein each conversion length is different.

33. The information decoding method as claimed in claim 31, wherein a signal coded as the first coded signal and a signal coded as the second coded signal differ from each other in the number of channels.

34. The information decoding method as claimed in claim 27, wherein the first coded signal is a signal obtained by coding an image signal.

35. The information decoding method as claimed in claim 34, wherein the second coded signal is a signal obtained by coding information including a character code.

36. A providing medium for providing a control command for causing an information processing device to carry out processing comprising:
a first decoding step of decoding a first coded signal obtained by coding a signal generated by mixing a plurality of signals;
a second decoding step of decoding a second coded signal obtained by coding information including a component for cancelling a part of the first coded signal; and
a synthesis step of synthesizing the signal from the first decoding step and the signal from the second decoding step.

37. A recording medium having a code string recorded thereon, the code string including:
a first coded signal obtained by coding a signal generated by mixing a plurality of signals; and
a second coded signal obtained by coding information including a component for cancelling a part of the first coded signal.

38. An information coding device comprising:
first coding means for coding a mixed signal obtained by mixing a first signal and a second signal; and
second coding means for coding a third signal of higher definition than that of the first signal.

39. The information coding device as claimed in claim 38, wherein the first signal is a signal obtained by narrowing the band of the third signal.

40. The information coding device as claimed in claim 38, wherein the first coding means and the second coding means carry out coding in accordance with coding systems different from each other.

41. The information coding device as claimed in claim 38, wherein the second coding means carries out encipherment.

42. The information coding device as claimed in claim 38, wherein the signal coded by the first coding means is an acoustic signal.

43. The information coding device as claimed in claim 42, wherein the first and second coding means convert the acoustic signal to each block and code each block, and wherein each block length is different.

44. The information coding device as claimed in claim 42, wherein the signal coded by the first coding means and the signal coded by the second coding means differ from each other in the number of channels.

45. The information coding device as claimed in claim 38, wherein the signal coded by the first coding means is an image signal.

46. The information coding device as claimed in claim 38, further comprising code string synthesis means for synthesizing a first code string generated by the first coding means and a second code string generated by the second coding means for each predetermined unit, and for arranging the first and second code strings in opposite directions within each predetermined unit.

47. An information coding method comprising:
a first coding step of coding a mixed signal obtained by mixing a first signal and a second signal; and
a second coding step of coding a third signal of higher definition than that of the first signal.

48. The information coding method as claimed in claim 47, wherein the first signal is a signal obtained by narrowing the band of the third signal.

49. The information coding method as claimed in claim 47, wherein at the first coding step and the second coding step, coding is carried out in accordance with coding systems different from each other.

50. The information coding method as claimed in claim 47, wherein the second coding step includes encipherment.

51. The information coding method as claimed in claim 47, wherein the signal coded at the first coding step is an acoustic signal.

52. The information coding method as claimed in claim 51, wherein at the first and second coding steps, the acoustic signal is converted to each block and coded, and wherein each block length is different.

53. The information coding method as claimed in claim 51, wherein the signal coded at the first coding step and the signal coded at the second coding step differ from each other in the number of channels.

54. The information coding method as claimed in claim 47, wherein the signal coded at the first coding step is an image signal.

55. The information coding method as claimed in claim 47, further comprising a code string synthesis step of synthesizing a first code string generated at the first coding step and a second code string generated at the second coding step for each predetermined unit, and for arranging the first and second code strings in opposite directions within each predetermined unit.

56. A providing medium for providing a control command for causing an information processing device to carry out processing comprising:
a first coding step of coding a mixed signal obtained by mixing a first signal and a second signal; and
a second coding step of coding a third signal of higher definition than that of the first signal.

57. An information decoding device comprising:
first decoding means for decoding a first coded signal obtained by coding a signal generated by mixing a plurality of signals;
second decoding means for decoding a second coded signal obtained by coding a signal of higher definition than the first coded signal; and
control means for carrying out control to output a signal obtained by decoding either the first coded signal or the second coded signal.

58. The information decoding device as claimed in claim 57, wherein the first decoding means and the second decoding means decode signals of coding systems different from each other.

59. The information decoding device as claimed in claim 57, wherein the second decoding means decodes an enciphered second coded signal.

60. The information decoding device as claimed in claim 57, wherein the first coded signal is a signal obtained by coding an acoustic signal.

61. The information decoding device as claimed in claim 60, wherein the first and second coded signals are signals obtained by converting acoustic signals to each block and coding each block, and wherein each conversion length is different.

62. The information decoding device as claimed in claim 60, wherein a signal coded as the first coded signal and a signal coded as the second coded signal differ from each other in the number of channels.

63. The information decoding device as claimed in claim 57, wherein the first coded signal is a signal obtained by coding an image signal.

64. An information decoding method comprising:
a first decoding step of decoding a first coded signal obtained by coding a signal generated by mixing a plurality of signals;
a second decoding step of decoding a second coded signal obtained by coding a signal of higher definition than the first coded signal; and
a control step of carrying out control to output a signal obtained by decoding either the first coded signal or the second coded signal.

65. The information decoding method as claimed in claim 64, wherein at the first decoding step and the second decoding step, signals of coding systems different from each other are decoded.

66. The information decoding method as claimed in claim 64, wherein the second decoding step includes decoding of an enciphered second coded signal.

67. The information decoding method as claimed in claim 64, wherein the first coded signal is a signal obtained by coding an acoustic signal.

68. The information decoding method as claimed in claim 67, wherein the first and second coded signals are signals obtained by converting acoustic signals to each block and coding each block, and wherein each conversion length is different.

69. The information decoding method as claimed in claim 67, wherein a signal coded as the first coded signal and a signal coded as the second coded signal differ from each other in the number of channels.

70. The information decoding method as claimed in claim 64, wherein the first coded signal is a signal obtained by coding an image signal.

71. A providing medium for providing a control command for causing an information processing device to carry out processing comprising:
a first decoding step of decoding a first coded signal obtained by coding a signal generated by mixing a plurality of signals;
a second decoding step of decoding a second coded signal obtained by coding a signal of higher definition than the first coded signal; and
a control step of carrying out control to output a signal obtained by decoding either the first coded signal or the second coded signal.

72. A recording medium having a code string recorded thereon, the code string including:
a first coded signal obtained by coding a signal generated by mixing a plurality of signals; and
a second coded signal obtained by coding a signal of higher definition than the first coded signal.
